(19) Europäisches Patentamt
European Patent Office
Office européen des brevets

(11) EP 2 208 989 A1

(12) **EUROPEAN PATENT APPLICATION**
published in accordance with Art. 153(4) EPC

(43) Date of publication:
**21.07.2010 Bulletin 2010/29**

(21) Application number: **08847734.4**

(22) Date of filing: **23.10.2008**

(51) Int Cl.:
***G01N 27/416*** *(2006.01)* ***G01N 27/26*** *(2006.01)*

(86) International application number:
**PCT/JP2008/069239**

(87) International publication number:
**WO 2009/060727 (14.05.2009 Gazette 2009/20)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **09.11.2007 JP 2007292504**

(71) Applicant: **Beckman Coulter, Inc.**
**Brea, 92821 CA (US)**

(72) Inventor: **ISHIBE, Isao**
**Sunto-gun,**
**Shizuoka 4110931 (JP)**

(74) Representative: **von Hellfeld, Axel**
**Wuesthoff & Wuesthoff**
**Patent- und Rechtsanwälte**
**Schweigerstrasse 2**
**81541 München (DE)**

(54) **ANALYZER**

(57) The object is to provide an analyzer that enables the person in charge to perform malfunctioning identification in an easy and speedy manner. An analyzer (1) according to the present invention is an analyzer that, based on a voltage value of an ion selective electrode making contact with a liquid specimen, analyzes concentration of an electrolyte present in the liquid specimen. The analyzer (1) includes a measuring cell (33) that measures the voltage value in succession, a memory unit (54) that stores therein a waveform indicating time variation in the voltage values measured by the measuring cell (33) and reference information used in identifying malfunctioning in the analyzer (1), an output unit (53) that outputs an analysis result of the liquid specimen, and a control unit (40) that causes the output unit 53 (to) output the waveform and the reference information stored in the memory unit (54).

FIG.1

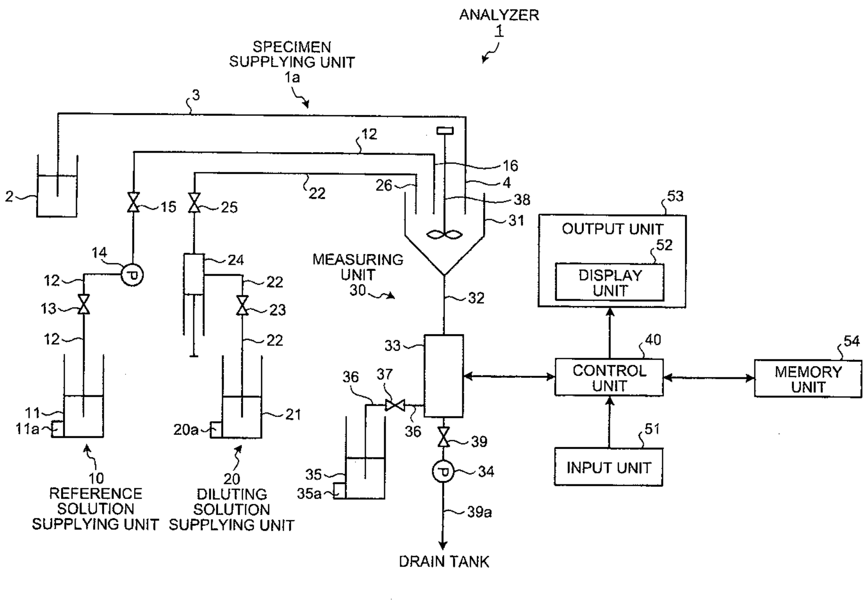


EP 2 208 989 A1

## Description

### TECHNICAL FIELD

The present invention relates to an analyzer that, based on voltage values of ion selective electrodes making contact with a liquid specimen and voltage values of a comparison electrode, analyzes the concentration of electrolytes present in the liquid specimen.

### BACKGROUND ART

As an electrolyte analyzer for analyzing electrolytes present in a specimen such as urine or blood, an analyzer has been disclosed that measures the concentration of electrolytes with the use of an ion selective electrode (e.g., see Patent Document 1). Such an electrolyte analyzer includes an ion selective electrode and a comparison electrode for measuring the electromotive force (difference in the electric potential detected at the ion selective electrode and the electric potential detected at the comparison electrode) of a diluted specimen that is diluted with a diluting solution and measuring the electromotive force of a reference solution. Then, based on the measurement data regarding the diluted specimen and the reference solution, the electrolyte analyzer measures the concentration of electrolytes present in the specimen.
Patent Document 1: Japanese Laid-open Patent Publication No. 2001-4586

### DISCLOSURE OF INVENTION

### PROBLEM TO BE SOLVED BY THE INVENTION

Meanwhile, due to malfunctioning of the components of a conventional electrolyte analyzer, the measured voltage values output from the ion selective electrode or from the comparison electrode sometimes include an unexpectedly-occurring irregular noise at which the voltage changes to a pulse shape. The data containing such unexpectedly-occurring irregular noise has errors and cannot be used as the measurement data. Unless the malfunctioning components are repaired, it is highly likely that such noise occurs repeatedly. Thus, to maintain a high accuracy during the electrolyte analysis, it becomes necessary to identify the malfunctioning components and repair the same.
In the conventional method of identifying the components responsible for noise occurrence, the person in charge for maintenance and management waits beside the electrolyte analyzer until a condition identical to the malfunctioning condition reoccurs and, when a condition identical to the malfunctioning condition reoccurs, measures the voltage value at that point of time for analyzing the problem. However, such a method causes a prolonged period of waiting time during which the electrolyte analyzer is not available for the analysis purpose. Besides, the task of waiting for a long period of time for recurrence of a malfunctioning condition puts a heavy burden on the person in charge for maintenance and management.
The present invention has been made in view of the above and it is an object of the present invention to provide an analyzer that enables the person in charge to perform malfunctioning identification in an easy and speedy manner.

### MEANS FOR SOLVING PROBLEM

To solve the problem described above and achieve the object, an analyzer according to the present invention that based on a voltage value of an ion selective electrode making contact with a liquid specimen analyzes concentration of an electrolyte present in the liquid specimen includes a measuring unit that continuously measures the voltage value; a memory unit that stores therein a waveform indicating time variation in the voltage value measured by the measuring unit and reference information used in identifying malfunctioning in the analyzer; an output unit that outputs an analysis result of the liquid specimen; and a control unit that causes the output unit to output the waveform and the reference information stored in the memory unit.
In the analyzer according to the present invention, as the reference information, the memory unit stores therein a time chart indicating an operation timing of each component of the analyzer, and the control unit causes the output unit to output, out of the time chart stored in the memory unit, a time chart corresponding to a measurement period of the waveform that the output unit outputs.
In the analyzer according to the present invention, as the reference information, the memory unit stores therein an analysis result of each liquid specimen, and the control unit causes the output unit to output, out of the analysis result stored in the memory unit, an analysis result of a liquid specimen that is analyzed during a measurement period of the waveform that the output unit outputs.
In the analyzer according to the present invention, after a predetermined time interval, the control unit erases the waveform stored in the memory unit and starts newly recording the waveform in the memory unit.

In the analyzer according to the present invention, each time a calibration processing is performed, the control unit erases the waveform stored in the memory unit and starts newly recording the waveform in the memory unit.

In the analyzer according to the present invention, an input unit through which instruction information regarding an instruction of outputting the waveform is input is further included, and when the instruction information is input through the input unit, the control unit causes the output unit to output the waveform and the reference information.

In the analyzer according to the present invention, when anomaly is found in an analysis result of the liquid specimen, the control unit causes the output unit to output the waveform and the reference information.

In the analyzer according to the present invention, a detecting unit that detects an anomalous value from each voltage value forming the waveform is further included, when a voltage value to be verified differs from a voltage value measured at a predetermined time earlier or later than a measurement time of the voltage value to be verified by a difference value that exceeds a predetermined threshold value, the detecting unit determines that the voltage value to be verified is an anomalous value, and out of the waveform stored in the memory unit, the control unit causes the output unit to output a portion that includes the voltage value determined to be an anomalous value by the detecting unit.

In the analyzer according to the present invention, out of reference information that the output unit outputs, the control unit causes the output unit to output in a predetermined output method a portion that corresponds to a measurement time of the voltage value determined to be an anomalous value by the detecting unit.

In the analyzer according to the present invention, a malfunctioning identifying unit that refers to a detection result of the detecting unit and a time chart of each component of the analyzer, and determines that a component operating during a measurement time of the voltage value determined to be an anomalous value by the detecting unit is likely to have malfunctioned is further included, and the control unit causes the output unit to output a determination result of the malfunctioning identifying unit.

## EFFECT OF THE INVENTION

According to an aspect of the present invention, waveforms indicating time variation in the voltage values of ion selective electrodes making contact with a liquid specimen and reference information used in identifying malfunctioning in the analyzer are stored and output. Thus, without having to wait for recurrence of a condition identical to a malfunctioning condition, the person in charge for maintenance and management can perform malfunctioning identification in an easy and speedy manner by making use of the waveforms and the reference information.

## BRIEF DESCRIPTION OF DRAWINGS

FIG. 1 is a schematic diagram of a configuration of an analyzer according to the first embodiment.
FIG. 2 is a block diagram of a configuration of a control unit in the analyzer illustrated in FIG. 1.
FIG. 3 is a flowchart explaining the sequence of operations performed to output waveforms indicating time variation in voltage values of ion selective electrodes in the analyzer illustrated in FIG. 1.
FIG. 4 is a schematic diagram of an example of a display screen on a display unit illustrated in FIG. 1.
FIG. 5 is a graph of exemplary time variation in voltage values measured at an ion selective electrode for Na.
FIG. 6 is a graph of exemplary time variation in voltage values measured at an ion selective electrode for K.
FIG. 7 is a graph of exemplary time variation in voltage values measured at an ion selective electrode for Cl.
FIG. 8 is a schematic diagram of an example of a display screen on the display unit illustrated in FIG. 1.
FIG. 9 is a schematic diagram of an example of a display screen on the display unit illustrated in FIG. 1.
FIG. 10 is a schematic diagram of a configuration of an analyzer according to a second embodiment.
FIG. 11 is a block diagram of a configuration of a control unit in the analyzer illustrated in FIG. 10.
FIG. 12 is a flowchart explaining the sequence of operations performed to output waveforms indicating time variation in voltage values of ion selective electrodes in the analyzer illustrated in FIG. 10.
FIG. 13 is a flowchart explaining the sequence of operations in an anomalous value detecting operation illustrated in FIG. 12.
FIG. 14 is a graph explaining the anomalous value detecting operation illustrated in FIG. 13.
FIG. 15 is a graph explaining the anomalous value detecting operation illustrated in FIG. 13.
FIG. 16 is a schematic diagram of an example of a display screen on the display unit illustrated in FIG. 10.
FIG. 17 is a schematic diagram of an example of a display screen on the display unit illustrated in FIG. 10.
FIG. 18 is a schematic diagram of an example of a display screen on the display unit illustrated in FIG. 10.
FIG. 19 is a schematic diagram of a configuration of an analyzer according to a third embodiment.
FIG. 20 is a block diagram of a configuration of a control unit in the analyzer illustrated in FIG. 19.

FIG. 21 is a flowchart explaining the sequence of operations performed up to a malfunctioning identification processing in the analyzer illustrated in FIG. 19.
FIG. 22 is a flowchart explaining the sequence of operations in the malfunctioning identification processing illustrated in FIG. 21.
FIG. 23 is a schematic diagram explaining the malfunctioning identification processing illustrated in FIG. 22.
FIG. 24 is a schematic diagram of an example of a display screen on the display unit illustrated in FIG. 19.

EXPLANATIONS OF LETTERS OR NUMERALS

| | |
|---|---|
| 1, 201, 301 | Analyzer |
| 1a | Specimen supplying unit |
| 2 | Specimen vessel |
| 3 | Duct |
| 4 | Dispensing nozzle |
| 10 | Reference solution supplying unit |
| 11 | Reference solution vessel |
| 11a, 20a, 35a, | Remaining quantity sensor |
| 12 | Duct |
| 13 | Solenoid valve |
| 14 | Perista pump |
| 15 | Solenoid valve |
| 16 | Dispensing nozzle |
| 20 | Diluting solution supplying unit |
| 21 | Diluting solution vessel |
| 22 | Duct |
| 23 | Solenoid valve |
| 24 | Syringe pump |
| 25 | Solenoid valve |
| 26 | Dispensing nozzle |
| 30 | Measuring unit |
| 31 | Dilution tank |
| 32 | Duct |
| 33 | Measuring cell |
| 34 | Test liquid suction pump |
| 35 | Comparison electrode liquid vessel |
| 36 | Duct |
| 37 | Solenoid valve |
| 38 | Stir bar |
| 39 | Drain valve |
| 39a | Duct |
| 40 | Control unit |
| 41 to 44 | Preamplifier |
| 45 | A/D converter |
| 46 | Processing control unit |
| 46a | Data processing unit |
| 46b | Calculating unit |
| 46c | Memory |
| 46d | Operation control unit |
| 47 | Communication interface |
| 51 | Input unit |
| 52 | Display unit |
| 53 | Output unit |
| 54 | Memory unit |

| | |
|---|---|
| 240 | Control unit |
| 246 | Operation control unit |

246e Detecting unit
340 Control unit
34 Operation control unit
346f Malfunctioning identifying unit

BEST MODE(S) FOR CARRYING OUT THE INVENTION

Exemplary embodiments of an analyzer for analyzing electrolytes present in a specimen such as urine or blood according to the present invention will be described below in detail with reference to the accompanying drawings. The present invention is not limited to the embodiments described below. In drawings, identical portions are labeled with identical reference numerals.

(First embodiment)

Given below is the description about a first embodiment. FIG. 1 is a schematic diagram of a configuration of an analyzer according to the first embodiment. FIG. 2 is a block diagram of a configuration of a control unit in the analyzer illustrated in FIG. 1. As illustrated in FIG. 1, an analyzer 1 according to the first embodiment includes a specimen supplying unit 1a, a reference solution supplying unit 10, a diluting solution supplying unit 20, a measuring unit 30, and a control unit 40.

The specimen supplying unit 1a transfers a specimen such as urine or blood, which is filled in a specimen vessel 2, via a duct 3 and dispenses a predetermined quantity of the specimen into a dilution tank 31 through a dispensing nozzle 4. The reference solution supplying unit 10 dispenses a reference solution from a reference solution vessel 11 into the dilution tank 31 via a duct 12 and though a dispensing nozzle 16. In the reference solution supplying unit 10, a solenoid valve 13, a Perista pump 14, and a solenoid valve 15 are disposed in the duct 12 between the reference solution vessel 11 and the dispensing nozzle 16. In the reference solution vessel 11 is disposed a remaining quantity sensor 11a that detects the quantity of the reference solution remaining in the reference solution vessel 11. The detection result of the remaining quantity sensor 11a is output to the control unit 40.

The diluting solution supplying unit 20 dispenses a diluting solution from a diluting solution vessel 21 into the dilution tank 31 via a duct 22 and through a dispensing nozzle 26. In the diluting solution supplying unit 20, a solenoid valve 23, a syringe pump 24, and a solenoid valve 25 are disposed in the duct 22 between the diluting solution vessel 21 and the dispensing nozzle 26. A stir bar 38 homogeneously stirs the liquids such as the specimen and the diluting solution dispensed into the dilution tank 31. In the diluting solution vessel 21 is disposed a remaining quantity sensor 20a that detects the quantity of the diluting solution remaining in the diluting solution vessel 21. The detection result of the remaining quantity sensor 20a is output to the control unit 40.

In the measuring unit 30, a measuring cell 33 for measuring voltage values of liquids is disposed in a duct 32 that is connected to the dilution tank 31. The reference solution and the diluted specimen flow in the measuring cell 33 in an alternating manner. Thus, the measuring cell 33 alternately measures the voltage value of the reference solution and the voltage value of the diluted specimen. The measuring cell 33 is configured to measure a voltage value not only at measurement timing but in succession and sequentially output the measured voltage value. To the bottom part of the measuring cell 33 is connected a duct 36 via which a comparison electrode liquid is guided from a comparison electrode liquid vessel 35.

The duct 36 is provided with a solenoid valve 37. Herein, it is assumed that the measuring cell 33 includes a plurality of ion selective electrodes, each of which is disposed to make contact with the specimen and disposed with respect to a different target electrolyte for measurement. For example, in the measuring cell 33 are housed three types of ion selective electrodes that respectively measure the ion concentration of sodium (Na), potassium (K), and chlorine (Cl) and a comparison electrode. Regarding the ion selective electrodes and the comparison electrode, the measurement at each ion selective electrode and the measurement at the comparison electrode are performed in an alternating manner. Meanwhile, in the comparison electrode liquid vessel 35 is disposed a remaining quantity sensor 35a that detects the quantity of the comparison electrode liquid remaining in the comparison electrode liquid vessel 35. The detection result of the remaining quantity sensor 35a is output to the control unit 40.

To the measuring cell 33 is connected a duct 39a that in turn is connected to a drain tank and that is provided with a drain valve 39 and a test liquid suction pump 34. When the measuring cell 33 finishes measurement for a test liquid such as the specimen or the comparison electrode liquid, the test liquid suction pump 34 pumps the test liquid from the measuring cell 33 to the drain tank.

The control unit 40 controls the operations of each component of the analyzer, processes data regarding each ion concentration output by the measuring cell 33 and performs analysis by calculating the concentration of electrolytes. As illustrated in FIG. 1, the control unit 40 is connected to an input unit 51, an output unit 53, and a memory unit 54.

The input unit 51 is constructed with a mouse, a keyboard, and the like and is used in receiving from outside a variety of information necessary for specimen analysis or instructions regarding analysis tasks. The output unit 53 is constructed with a printer, a speaker, and the like and is used in outputting a variety of information including the analysis result of specimens. The output unit 53 includes a display unit 52 made of a display panel.

The memory unit 54 is constructed with a hard disk that magnetically stores therein a variety of information including the analysis result of specimens. The memory unit 54 stores therein reference information that is used in identifying malfunctioning in the analyzer 1. Moreover, the memory unit 54 also stores therein time charts indicating the operation timing of each component of the analyzer 1 along with the analysis result of each specimen. The memory unit 54 can include an auxiliary storage that is able to read information stored in a memory medium such as a CD-ROM, a DVD-ROM, or a PC card.

As illustrated in FIG. 2, the control unit 40 includes preamplifiers 41 to 44, an A/D converter 45, a processing control unit 46, and a communication interface 47. The preamplifiers 41 to 44 respectively amplify output signals (voltage values) output from the three types of ion selective electrodes and the comparison electrode, which form the measuring cell 33, and output those signals to the A/D converter 45. The A/D converter 45 receives analog data output by the preamplifiers 41 to 44 and converts the analog data into digital data. Since the measuring unit 30 measures the voltage values in succession, the A/D converter 45 sequentially outputs the digital data corresponding to the voltage values measured by the measuring unit 30.

The processing control unit 46 includes a data processing unit 46a, a calculating unit 46b, a memory 46c, and an operation control unit 46d that controls the operations of the above-mentioned components of the analyzer 1. A central processing unit (CPU) is used as the processing control unit 46. The data processing unit 46a outputs, to the calculating unit 46b, a plurality of digital data of the ion concentration of each of Na, K, and Cl output by the A/D converter 45 in the order of measurement timings. Then, based on the voltage values input as the measurement data, the calculating unit 46b calculates the concentration of electrolytes present in the specimen by making use of calibration curves, each of which is measured in advance with respect to the ion concentration of each of Na, K, and Cl. Assuming that the concentration of the reference solution is Cm, the difference value between the voltage value of the reference solution and the voltage value of the diluted specimen is a voltage value E, and a slope value obtained by calibration processing is Sp; then a concentration Cx of electrolytes present in the specimen is calculated as given below in Equation (1).

$$Cx = Cm \times 10^{(E/Sp)} \qquad (1)$$

The calculating unit 46b outputs a concentration value calculated using Equation (1). If the calculated concentration value is an anomalous value exceeding a normal range, then the calculating unit 46b outputs an anomalous value notice along with the concentration value.

The memory 46c stores therein the calibration curves. Besides, the memory 46c temporarily stores therein each voltage value measured in the measuring cell 33 and calculation results of electrolyte concentrations in the specimen. The information stored in the memory 46c is output to the memory unit 54 illustrated in FIG. 1 and stored therein. The memory unit 54 stores therein the voltage values measured in succession by the measuring unit 30 in a corresponding manner with the measurement timings of the voltage values. Regarding each voltage value, the memory unit 54 stores therein a waveform that indicates the time variation in that voltage value measured by the measuring unit 30. The memory unit 54 and the control unit 40 are connected with a communication tool having the capacity of equal to or more than a few hundred kbps. Thus, the voltage values measured in succession are communicable between the memory unit 54 and the control unit 40.

The communication interface 47 serves as an interface for data communication by connecting the analyzer 1 to another analyzer or to a host computer of a manufacturer via an online network.

In the analyzer 1 configured in the above-mentioned manner are stored the waveforms that indicate the time variation in the voltage values of the ion selective electrodes making contact with the specimen and the reference information that is used in identifying malfunctioning in the analyzer 1. The analyzer 1 outputs the waveforms and the reference information in order to support the task of malfunctioning identification performed for the analyzer 1 by the person in charge for maintenance and management.

Given below is the description with reference to FIG. 3 about the sequence of operations performed to output the waveforms that indicates the time variation in the voltage values of the ion selective electrodes in the analyzer 1. First, the analyzer 1 gets booted and the components thereof start operations (Step S2). When the analysis processing starts, the operation control unit 46d in the control unit 40 determines whether the timing is right for rewriting the voltage waveforms that are stored in the memory unit 54 and that indicate the time variation in the voltage values of the ion selective electrodes (Step S4).

For example, when a predetermined time has elapsed since the start of recording the voltage waveforms in the memory unit 54, the operation control unit 46d determines that the timing is right for rewriting the voltage waveforms.

The predetermined elapsed time is set according to the memory capacity of the memory unit 54. If the memory unit 54 has a sufficient memory capacity to store the voltage waveform regarding each voltage value measured over a period of two days, then the operation control unit 46d determines that the timing is right for rewriting the voltage waveforms after completion of two days since the start of recording the voltage waveforms in the memory unit 54. Besides, each time the calibration processing is performed, the operation control unit 46d determines that the timing is right for rewriting the voltage waveforms. By performing the calibration processing, the calibration curves gets newly set and the calibration curve used in calculating the concentration value of each specimen changes. Thus, the operation control unit 46d can be configured to rewrite the voltage waveforms at the changeover timing of the calibration curves. Alternatively, each time the analyzer 1 is subjected to maintenance, the operation control unit 46d can rewrite the voltage waveforms and start recording the voltage waveforms necessary for the subsequent maintenance.

When the timing is determined to be right for rewriting the voltage waveforms (Yes at Step S4), the operation control unit 46d erases the previous voltage waveforms from the memory unit 54 (Step S6) and starts recording new voltage waveforms in the memory unit 54 (Step S8). In contrast, when the timing is not determined to be right for rewriting the voltage waveforms (No at Step S4), the operation control unit 46d continues the recording of the voltage waveforms in the memory unit 54 (Step S10).

Then, the operation control unit 46d determines whether there is anomaly in the concentration values output as analysis data from the calculating unit 46b (Step S12). When anomaly is found in the concentration values output as analysis data from the calculating unit 46b (Yes at Step S12), the operation control unit 46d causes the output unit 53 to output a warning indicating that there is anomaly in the concentration values as analysis data (Step S14).

When no anomaly is found in the concentration values output as analysis data from the calculating unit 46b (No at Step S12) or after the warning is output (Step S14), the operation control unit 46d determines whether an output instruction is issued for outputting the voltage waveforms stored in the memory unit 54 (Step S18). For example, when a voltage waveform display menu listed in a menu list displayed on the display unit 52 is selected by the operator of the analyzer 1 using the mouse or the keyboard, the input unit 51 receives instruction information regarding the instruction to output the voltage waveforms. In addition, when, in the operation of outputting the warning at Step S14, a voltage waveform selection field listed in a warning menu output on the display unit 52 is selected by the operator of the analyzer 1 using the mouse or the keyboard, the input unit 51 receives the instruction information regarding the instruction to output the voltage waveforms.

When the instruction information regarding the instruction to output the voltage waveforms is received by the input unit 51, the operation control unit 46d determines that an output instruction for outputting the voltage waveforms has been issued (Yes at Step S18) and performs a voltage waveform output processing that includes instructing the output unit 53 to output the voltage waveforms stored in the memory unit 54 (Step S20). In this case, the operation control unit 46d causes the output unit 53 to output the voltage waveforms along with the reference information that is used in identifying malfunctioning in the analyzer 1. In this way, when anomaly is found in the analysis result of a specimen, the operation control unit 46d causes the output unit 53 to output the voltage waveforms and the reference information. Thus, when anomaly is found in the analysis result, the person in charge for maintenance and management of the analyzer 1 is able to promptly perform malfunctioning analysis and identify the malfunctioning components causing anomaly in the analysis result. Moreover, since the operation control unit 46d causes the output unit 53 to output the voltage waveforms and the reference information in response to the instruction information regarding the instruction to output the voltage waveforms received by the input unit 51, it becomes possible for the person in charge for maintenance and management of the analyzer 1 to freely obtain the voltage waveforms and the reference information whenever malfunctioning analysis needs to be performed during maintenance. Therefore, the malfunctioning analysis of the analyzer 1 can be performed in a quick and efficient manner.

Meanwhile, when the output instruction for outputting the voltage waveforms is not issued (No at Step S18) or when the voltage waveform output processing (Step S20) is complete, the operation control unit 46d determines whether to finish the analysis processing (Step S22). For example, if the input unit 51 receives an input of instruction information regarding an instruction to temporarily halt the analysis processing in order to find anomaly in the analysis data, then the operation control unit 46d determines to finish the analysis processing (Yes at Step S22), finishes the analysis processing, and stops the recording of the voltage waveforms in the memory unit 54 (Step S24). In contrast, when the input unit 51 does not receive an input of the instruction information regarding the instruction to temporarily halt the analysis processing (Step S22), the operation control unit 46d continues the analysis processing in the analyzer 1 and determines, at Step S4, whether the timing is right for rewriting the voltage waveforms in the memory unit 54.

Given below is the detailed description of the voltage waveforms and the reference information output from the output unit 53 during the voltage waveform output processing at Step S20 illustrated in FIG. 3. FIG. 4 is a schematic diagram of an example of a display screen on the display unit 52 on which are output the time charts stored as the reference information in the memory unit 54.

For example, in a voltage waveform display menu M1 in FIG. 4 is illustrated a waveform chart W1 that includes waveforms LK and LNa indicating time variation in the voltage values of two ion selective electrodes and a time chart diagram T1 that corresponds to the waveform measuring period of the waveform chart W1 and includes the time charts of the components stored in the memory unit 54. Thus, in the time chart diagram T1, a portion of the time chart of each component is displayed.

In a section R14 in the time chart diagram T1, a time chart indicating the operating condition of the Perista pump 14, which controls the pumping of the reference solution, is displayed. In a section R38, a time chart indicating the rotating condition of the stir bar 38 is displayed. In a section R34, a time chart indicating the operating condition of the test liquid suction pump 34 is displayed. Since the measurement value of each ion selective electrode in the measuring cell 33 gets affected by the shaking of the liquid in contact, the time chart diagram T1 includes time charts of those components that are engaged in the transfer of liquids such as the diluted specimen, the reference solution used in the analysis processing of the diluted specimen, and the comparison electrode liquid.

In the waveform chart W1, from among the ion selective electrodes, the waveform LK indicating the voltage value measured at the electrode for potassium (K) and the waveform LNa indicating the voltage value measured at the electrode for sodium (Na) are displayed. Meanwhile, by operating the input unit 51, each waveform can be displayed in a magnified or reduced size.

At the bottom of the waveform chart W1 is provided a scrollbar B2 that can be used to change the waveforms displayed in the waveform chart W1 and the time charts displayed in the time chart diagram T1. Meanwhile, by moving a slider S1 in the scroll bar B2 to right and left using the mouse, the person in charge for maintenance and management of the analyzer 1 can view the waveforms in the waveform chart W1 and the time charts in the time chart diagram T1 corresponding to an intended period of time. When the slider S1 is moved leftward of the scrollbar B2, the waveforms and time charts are displayed by going backward in time. Conversely, the opposite case occurs when the slider S1 is moved rightward of the scrollbar B2. Below the scrollbar B2 is provided a time bar B1 that corresponds to the total measurement period of the waveforms stored in the memory unit 54. On the time bar B1, a marker Ma1 that indicates the position of the measurement time of the waveforms in the waveform chart W1 within the total measurement period is displayed along with the actual clock time of measurement.

As exemplified in the voltage waveform display menu M1, from among the time charts stored in the memory unit 54, the operation control unit 46d causes the output unit 53 to output the time charts corresponding to the measurement period of the voltage waveforms that the output unit 53 is instructed to output. By viewing the waveform chart W1 and the time chart diagram T1 displayed in the voltage waveform display menu M1, the person in charge for maintenance and management of the analyzer 1 is able to recognize that an anomalous peak P1 had appeared in a voltage waveform and also get to know about the components that were operating at the point of time when the anomalous peak P1 had appeared. Thus, the person in charge can determine that the components working at the point of time when the anomalous peak P1 had appeared are likely to have malfunctioned and caused the anomalous peak P1 to appear. Hence, just by viewing the voltage waveform display menu M1, the person in charge for maintenance and management is able to correctly understand about the anomalous peak P1 and the components that were operating at the point of time when the anomalous peak P1 had appeared. Besides, since the person in charge for maintenance and management can view the waveform chart W1 and the time chart diagram T1 on the same screen in a comparative manner, it is possible to accurately understand about the components that were operating at the point of time when the anomalous peak P1 had appeared.

In FIG. 4, the waveform LK is exemplified to have the anomalous peak P1. A case is conceivable in which malfunctioning of a pump causes vibration in a duct. In that case, the waveforms lying almost smoothly when no malfunctioning occurs undergo changes as follows. In the waveform of the voltage value measured at the electrode for Na, noise occurs in the positive direction as illustrated in a waveform LNa1 in FIG. 5. In the waveform of the voltage value measured at the electrode for K, noise occurs in the positive direction as illustrated in a waveform LK1 in FIG. 6. In the waveform of the voltage value measured at the electrode for Cl, noise occurs in the negative direction as illustrated in a waveform LCL1 in FIG. 7.

Meanwhile, apart from the time charts exemplified in FIG. 4, the actual analysis data can also be output as the reference information from the output unit 53 at Step S20 during the voltage waveform output processing. FIG. 8 is a schematic diagram of an example of a display screen on the display unit 52 on which is output the analysis data stored as the reference information in the memory unit 54.

For example, in a menu M2 in FIG. 8, a voltage value list Dw1 is displayed that includes the actually measured voltage value in each ion selective electrode at each measurement timing and an analysis data list D1 is displayed that includes the analysis data of the specimen analyzed during the measurement period of the voltage values listed in the voltage value list Dw1.

On the right side of the voltage value list Dw1 is provided a scroll bar that can be used to change the voltage values listed in the voltage value list Dw1. By moving the screen up and down with the scroll bar, the voltage values listed in the voltage value list Dw1 and the analysis data in the analysis data list D1, which corresponds to the voltage values listed in the voltage value list Dw1, can be displayed corresponding to an intended period of time. In a column "First" on the left side in the voltage value list Dw1, the actual voltage values of the diluted specimen are listed; while in a column "Second" on the right side in the voltage value list Dw1, the actual voltage values of the reference solution are listed. A row RD1 in the analysis data list D1 is used to indicate whether each analysis data is normal or anomalous.

Moreover, to view the voltage values listed in the voltage value list Dw1 in the form of a waveform chart, the person in charge for maintenance and management can move a cursor C over a selection field S1 using the mouse and select the selection field S1. As a result of selecting the selection field S1, a menu M3 as illustrated in FIG. 9 is newly displayed on the display screen on the display unit 52. In the menu M3, the voltage values listed in the voltage value list Dw1 illustrated in FIG. 8 are displayed in the form of waveform charts in an area A1. In an area A2 on the left side inside the area A1, the waveform charts of the actual diluted specimen are displayed; while in an area A3 on the right side inside the area A2, the waveform charts of the reference solution are displayed. To revert the displayed menu to the menu M2 illustrated in FIG. 8, the person in charge for maintenance and management can select a selection field S2 using the mouse.

As exemplified in the menus M2 and M3, the operation control unit 46d causes the output unit 53 to output, from among the analysis result stored in the memory unit 54, the analysis result of the specimen that is analyzed during the measurement period of the voltage waveforms that the output unit 53 is instructed to output. By viewing the waveform charts in the area A1 and the analysis data list D1 displayed in the menu M3, the person in charge for maintenance and management of the analyzer 1 is able to recognize that an anomalous peak P2 had appeared in a voltage waveform and also get to know about the analysis data of the specimen that was analyzed at the point of time when the anomalous peak P2 had appeared. That is, the person in charge can check in detail the analysis data that was analyzed at the point of time when the anomalous peak P2 had appeared. Thus, just by checking the menus M2 and M3, the person in charge for maintenance and management is able to correctly understand about the anomalous peak P2 and the analysis result of the specimen that was analyzed at the point of time when the anomalous peak P2 had appeared.

In a conventional case, the person in charge for maintenance and management waits beside the electrolyte analyzer until a condition identical to a malfunctioning condition reoccurs and, when a condition identical to the malfunctioning condition reoccurs, measures the voltage values at that point of time for analyzing the problem. However, such a method causes a prolonged period of waiting time during which the electrolyte analyzer is not available for the analysis purpose. Besides, the task of waiting for a long period of time for recurrence of a malfunctioning condition puts a heavy burden on the person in charge for maintenance and management.

In contrast, in the analyzer 1 according to the first embodiment, the waveforms indicating the time variation in the voltage values of ion selective electrodes that make contact with a liquid specimen and the reference information that is used in identifying malfunctioning in the analyzer 1 are stored and output. That makes it possible for the person in charge for maintenance and management to obtain the waveforms in an easy and speedy manner without having to wait for recurrence of a condition identical to a malfunctioning condition. Besides, since, along with the waveforms, the analyzer 1 outputs the reference information used in identifying malfunctioning in the analyzer 1, the person in charge for maintenance and management is able to compare the reference information and the waveforms and accordingly perform malfunctioning identification in an easy and speedy manner.

(Second embodiment)

Subsequently, a second embodiment is described. In the second embodiment, anomalous values are detected from waveforms indicating the time variation in voltage values measured by a measuring cell and only that portion of the waveforms which includes the anomalous values is output. That enables achieving reduction in the burden on the person in charge for maintenance and management regarding malfunctioning identification.

FIG. 10 is a schematic diagram of a configuration of an analyzer according to the second embodiment. FIG. 11 is a block diagram of a configuration of a control unit in the analyzer illustrated in FIG. 10. As illustrated in FIG. 10, an analyzer 201 according to the second embodiment includes a control unit 240 in place of the control unit 40 illustrated in FIG. 1. In addition to the functions performed by the control unit 40 illustrated in FIG. 1, the control unit 240 is configured to determine whether any of the voltage values measured by a measuring cell is an anomalous value.

In comparison with the control unit 40 illustrated in FIG. 2, the control unit 240 illustrated in FIG. 11 includes a processing operation control unit 246 in which a detecting unit 246e is additionally disposed. The detecting unit 246e detects anomalous values from the voltage values forming waveforms. The detecting unit 246e checks whether a voltage value to be verified differs from and a voltage value measured at a predetermined time earlier or later than the measurement time of the voltage value to be verified by a difference value that exceeds a predetermined threshold value and, if the difference value exceeds the predetermined threshold value, determines that the voltage value to be verified is an anomalous value. Then, the operation control unit 46d causes the output unit 53 to output, from among the waveforms stored in the memory unit 54, the portion including the voltage values determined to be anomalous values by the detecting unit 246e. Moreover, the operation control unit 46d causes the output unit 53 to output a portion of the reference information, which the output unit 53 is instructed to output, that corresponds to the measurement time of the voltage values determined to be anomalous values by the detecting unit 246e.

Given below is the description with reference to FIG. 12 about the sequence of operations performed to output the waveforms indicating the time variation in the voltage values of the ion selective electrodes in the analyzer 201. As illustrated in FIG. 12 and in an identical manner to the operations at Steps S2 to S14 illustrated in FIG. 3, the analyzer 201 performs an analyzer booting operation (Step S202), a voltage-waveform-rewriting-timing determining operation (Step S204), a previous-voltage erasing operation (Step S206), a voltage-waveform-recording starting operation (Step S208), a voltage-waveform-recording continuing operation (Step S210), an analysis-data-anomaly determining operation (Step S212), and a warning outputting operation (Step S214).

Subsequently, the detecting unit 246e performs an anomalous value detecting operation in which anomalous values are detected from the voltage values forming the waveforms (Step S216). Then, identical to the operation at Step S18 in FIG. 3, the operation control unit 46d determines whether an output instruction is issued for outputting the voltage waveforms stored in the memory unit 54 (Step S218). When the instruction information regarding the instruction to output the voltage waveforms is received by the input unit 51, the operation control unit 46d determines that an output instruction for outputting the voltage waveforms has been issued (Yes at Step S218) and performs the voltage waveform output processing that includes instructing the output unit 53 to output the voltage waveforms stored in the memory unit 54 (Step S220). In this case, the operation control unit 46d causes the output unit 53 to output, from among the waveforms stored in the memory unit 54, the portion including the voltage values determined to be anomalous values by the detecting unit 246e. Moreover, in addition to the voltage waveforms, the operation control unit 46d causes the output unit 53 to output the reference information that is used in identifying malfunctioning in the analyzer 2. Herein, as the reference information, the operation control unit 46d causes the output unit 53 to output, from among the time charts of all components, the time charts corresponding to the measurement period of the voltage values determined to be anomalous values by the detecting unit 246e. Alternatively, as the reference information, the operation control unit 46d causes the output unit 53 to output, from among the entire analysis result, the analysis result of the specimen that is analyzed during the measurement period of the voltage values determined to be anomalous values by the detecting unit 246e.

Subsequently, in an identical manner to the operations at Steps S20 and S24 in FIG. 3, the operation control unit 46d performs an analysis-processing-finishing determining operation (Step S222) and a voltage-waveform-recording stopping operation (Step S224).

Given below is the description with reference to FIG. 13 about the anomalous value detecting operation illustrated in FIG. 12. As illustrated in FIG. 13, the detecting unit 246e obtains, as voltage waveform data, the voltage values forming a voltage waveform that is to be detected for anomalous values (Step S230). Then, the detecting unit 246e sets an identification number m of a voltage value to be verified as m=1 (Step S232) and, upon performing initialization, determines which of the voltage values are anomalous values.

Subsequently, from the voltage waveform data, the detecting unit 246e obtains a voltage value $E_m$ to be verified and a voltage value $E_{m-1}$ measured at a predetermined time earlier than the measurement time of the voltage value $E_m$, calculates the difference value between the voltage value $E_m$ and the voltage value $E_{m-1}$, and determines whether the modulus of the difference value is larger than a predetermined threshold value D. That is, the detecting unit 246e determines whether $|E_m-E_{m-1}|>D$ is true (Step S234). As described above, the voltage value E is the difference value between the voltage value of the reference solution and the voltage value of the diluted specimen. Meanwhile, as the voltage value $E_{m-1}$, the detecting unit 246e obtains a voltage value that is measured 100 msec earlier than the measurement time of the voltage value $E_m$.

The threshold value D is, for example, a voltage value that corresponds to a variance value with respect to a normal value of the concentration Cx of each electrolyte. The threshold value D is obtained using Equation (1) given above. For example, consider a case when the voltage values are measured using the ion selective electrode for Na. In that case, when the specimen is normal, a concentration $Cx_{Na}$ for Na is almost 140 [mmol/litre]. If the concentration $Cx_{Na}$ for Na is within an error range of 140 [mmol/litre] $\pm$1.5 [mmol/litre], that is, if the concentration $Cx_{Na}$ for Na is 140 [mmol/litre] $\pm$1.5 [mmol/litre]; then it is determined to be normal. Then, the threshold value D is the voltage value corresponding to 1.5 [mmol/litre], which is the error range of the concentration $Cx_{Na}$ for Na, and can be obtained using Equation (1). Meanwhile, in a case when the voltage values are measured using the ion selective electrode for K and when the specimen is normal, a concentration $Cx_k$ for K is determined to be normal if it is 4$\pm$0.1 [mmol/litre]. Then, the threshold value D is the voltage value corresponding to 0.1 [mmol/litre], which is the error range of the concentration $Cx_k$ for K, and can be obtained using Equation (1). Similarly, in a case when the voltage values are measured using the ion selective electrode for Cl and when the specimen is normal, a concentration $Cx_{Cl}$ for Cl is determined to be normal if it is 100$\pm$1.5 [mmol/litre]. Then, the threshold value D is the voltage value corresponding to 1.5 [mmol/1-itre], which is the error range of the concentration $Cx_{Cl}$ for Cl, and can be obtained using Equation (1).

As illustrated in FIG. 14, when a voltage waveform is normal without occurrence of any noise, then a voltage value E12 that is to be verified and that is the difference between a voltage value of the reference solution measured at time t12 and a voltage value of the specimen measured at time t22 is almost identical to a voltage value E11 that is the difference between a voltage value of the reference solution measured at time t11, which is earlier than time t12 by a predetermined time ta, and a voltage value of the test liquid measured at time t21, which is earlier than time t22 by the predetermined time ta. However, as illustrated in FIG. 15, when noise occurs in the portion of a voltage waveform corresponding to a voltage value E32 to be verified, then the voltage value E32 that is to be verified and that is the difference between a voltage value of the reference solution measured at time t32 and a voltage value of the test liquid measured at time t42 differs from a voltage value E31 that is the difference between a voltage value of the reference solution measured at time t31, which is earlier than time t32 by the predetermined time ta, and a voltage value of the test liquid measured at time t41, which is earlier than time t42 by the predetermined time ta. If a difference value T between the voltage value E31 and the voltage value E32 is larger than the threshold value D corresponding to the error range of the concentration Cx of electrolytes, then it can be assumed that an unexpected anomalous peak has appeared between time t31 and time t32 or between time t41 and time t42.

Consequently, when $|E_m-E_{m-1}|>D$ is determined to be true (Yes at Step S234), the detecting unit 246e determines that the voltage value $E_m$ to be verified is an anomalous value caused by an anomalous peak appearing in the voltage waveform (Step S236).

In contrast, when $|E_m-E_{m-1}|>D$ is determined to be false (No at Step S234), the detecting unit 246e further verifies with certainty whether the voltage value $E_m$ to be verified is normal. Specifically, the detecting unit 246e obtains a voltage value $E_{m+1}$ measured at a predetermined time later than the measurement time of the voltage value $E_m$ to be verified, calculates the difference value between the voltage value $E_m$ and the voltage value $E_{m+1}$, and determines whether the modulus of the difference value is larger than the predetermined threshold value D. That is, the detecting unit 246e determines whether $|E_m-E_{m+1}|>D$ is true (Step S238). For example, as the voltage value $E_{m+1}$, the detecting unit 246e obtains a voltage value that is measured 100 msec later than the measurement time of the voltage value $E_m$.

As illustrated in FIG. 14, when a voltage waveform is normal without occurrence of any noise, the voltage value E12 that is to be verified is almost identical to a voltage value E13 that is the difference between a voltage value of the reference solution measured at time t13, which is later than time t12 by a predetermined time tb, and a voltage value of the specimen measured at time t23, which is later than time t22 by the predetermined time tb. However, as illustrated in FIG. 15, when noise occurs in a voltage waveform, the voltage value E32 to be verified differs from a voltage value E33 that is the difference between a voltage value of the reference solution measured at time t33, which is later than time t32 by the predetermined time tb, and a voltage value of the specimen measured at time t43, which is later than time t42 by the predetermined time tb. If the difference value T between the voltage value E31 and the voltage value E32 is larger than the threshold value D corresponding to the error range of the concentration Cx of electrolytes, then it can be assumed that an unexpected anomalous peak has appeared between time t32 and time t33 or between time t42 and time t43.

Consequently, when $|E_m-E_{m+1}|>D$ is determined to be true (Yes at Step S238), the detecting unit 246e determines that the voltage value $E_m$ to be verified is an anomalous value caused by an anomalous peak appearing in the voltage waveform (Step S236).

In contrast, when $|E_m-E_{m+1}|>D$ is determined to be false (No at Step S238), the detecting unit 246e determines that the voltage value $E_m$ to be verified is normal (Step S240).

Subsequently, to determine whether the most recent voltage value that was verified was the last of the voltage values to be verified, the detecting unit 246e compares the identification number m of the most recent voltage value that was verified with a maximum value N of the identification number m and determines whether m=N (Step S242). If m=N is determined to be false (No at Step S242), then the detecting unit 246e increments the identification number m by 1 to make m=m+1 (Step S244), returns to Step S234, and determines whether the subsequent voltage value to be verified is an anomalous value. In contrast, if m=N is determined to be true (Yes at Step S242), then the detecting unit 246e outputs the detection result of anomaly with respect to all verified voltage values (Step S246) and finishes the anomalous waveform detecting operation.

Given below is the description about the voltage waveforms and the reference information output from the memory unit 54 at Step S220 during the voltage waveform output processing. FIG. 16 is a schematic diagram of an example of a display screen on the display unit 52 on which are output the time charts stored as the reference information in the memory unit 54. In the waveform chart W1 displayed in a voltage waveform display menu M21 in FIG. 16, the waveforms correspond to a portion including a voltage value determined to be an anomalous value by the detecting unit 246e. In the waveforms displayed in the waveform chart W1, a portion A21 including the anomalous peak P1 is displayed in a different display color than the other portion. In an identical manner to the waveform chart W1, in the time chart diagram T1, the portion A21 that corresponds to the measurement time of the voltage value determined to be an anomalous value by the detecting unit 246e is displayed in a different display color than the other portion.

At Step S220 during the voltage waveform output processing, when the analysis result stored as the reference information in the memory unit 54 is output along with the waveform chart, the analyzer 201 displays a voltage value list Dw2 displayed in a menu M22 in FIG. 17. For each voltage value in the voltage value list Dw2, a column Lw2 is used to indicate the anomaly determination result of the detecting unit 246e. If the selection field S1 is selected, the analyzer 201 displays a menu M32 illustrated in FIG. 18. In the waveform charts displayed inside the area A1 in the menu M32 in FIG. 18, the portion including a voltage value determined to be an anomalous value by the detecting unit 246e is displayed. In the displayed waveforms, a portion A22 including the anomalous peak P2 is displayed in a different display color than the other portion. In an identical manner to the waveform chart W1, the analysis data list D1 includes the analysis result of the specimen analyzed during the measurement period for the voltage value determined to be an anomalous value by the detecting unit 246e.

In this way, in the analyzer 201, anomalous values are detected from waveforms indicating the time variation in the voltage values measured by a measuring cell and only the portion including the anomalous values is output from among the waveforms stored in the memory unit 54. Hence, just by viewing the waveforms output by the analyzer 201, the person in charge for maintenance and management of the analyzer 201 is able to recognize an anomalous portion in a waveform. That is, there is no need to keep looking out for anomalous portions in the waveforms. Besides, in the analyzer 201, the portion from among the output waveforms that includes anomalous values is output using a different output method than the other portion. As a result, the person in charge for maintenance and management can instantly recognize the portion including anomalous values. Moreover, in the analyzer 201, the portion of the reference information, from among the reference information stored in the memory unit 54, that corresponds to the measurement time of a voltage value determined to be an anomalous value is output using a different and predetermined output method than the other portion. As a result, the person in charge for maintenance and management can instantly recognize the portion of the reference information that corresponds to the anomalous portion in the waveforms. Thus, by comparing the instantly-recognizable anomalous portion in the waveforms and the instantly-recognizable reference information corresponding to the anomalous portion in the waveforms, the person in charge for maintenance and management can perform malfunctioning analysis of the analyzer 201 in a further easy and speedy manner.

(Third embodiment)

Subsequently, a third embodiment is described. In the third embodiment, anomalous values are detected from waveforms indicating the time variation in voltage values measured by a measuring cell and components attributable to the occurrence of the anomalous values are identified in the analyzer. That enables achieving further reduction in the burden on the person in charge for maintenance and management regarding malfunctioning identification.

FIG. 19 is a schematic diagram of a configuration of an analyzer according to the third embodiment. FIG. 20 is a block diagram of a configuration of a control unit in the analyzer illustrated in FIG. 19. As illustrated in FIG. 19, an analyzer 301 according to the third embodiment includes a control unit 340 in place of the control unit 40. In addition to the functions performed by the control unit 40 illustrated in FIG. 1, the control unit 340 is configured to determine which of the voltage values measured by a measuring cell is an anomalous value and, upon finding the anomalous value, identify components of the analyzer 301 that have malfunctioned and caused the anomalous value to occur.

In comparison with the control unit 240 illustrated in FIG. 11, the control unit 340 illustrated in FIG. 20 includes a processing operation control unit 346 in which a malfunctioning identifying unit 346f is additionally disposed. The malfunctioning identifying unit 346f refers to the detection result of the detecting unit 246e and the time chart of each component, and determines that components that were operating at the measurement time of a voltage value determined to be an anomalous value by the detecting unit 246e are likely to have malfunctioned. The operation control unit 46d then causes the output unit 53 to output the determination result of the malfunctioning identifying unit 346f.

Given below is the description with reference to FIG. 21 about the sequence of operations performed to output a malfunctioning identification result from the analyzer 301 illustrated in FIG. 19. As illustrated in FIG. 21 and in an identical manner to the operations at Steps S2 to S14 illustrated in FIG. 3, the analyzer 301 performs an analyzer booting operation (Step S302), a voltage-waveform-rewriting-timing determining operation (Step S304), a previous-voltage erasing operation (Step S306), a voltage-waveform-recording starting operation (Step S308), a voltage-waveform-recording continuing operation (Step S310), an analysis-data-anomaly determining operation (Step S312), and a warning outputting operation (Step S314).

Subsequently, in an identical manner to the operation at Step S216 in FIG. 12, the analyzer 301 performs an anomalous value detecting operation (Step S316). Then, the operation control unit 46d determines whether a malfunctioning identification instruction is issued (Step 5318). For example, when a malfunctioning identification menu listed in a menu list displayed on the display unit 52 is selected by the operator of the analyzer 301 using the mouse or the keyboard, the input unit 51 receives instruction information regarding the malfunctioning identification instruction. Meanwhile, in the operation of outputting the warning at Step S314, when a malfunctioning identification selection field listed in a warning menu output from the display unit 52 is selected by the operator of the analyzer 301 using the mouse or the keyboard, the input unit 51 receives instruction information regarding the instruction to output the voltage waveforms.

When the instruction information regarding the malfunctioning identification instruction is received by the input unit 51, the operation control unit 46d determines that a malfunctioning identification instruction has been issued (Yes at Step S318) and performs a malfunctioning identification processing in which the malfunctioning identifying unit 346f determines that malfunctioning is likely to have occurred in the analyzer 301 (Step S320). When the malfunctioning identification processing is complete or when no malfunctioning identification instruction is received (No at Step S318);

then, in an identical manner to the operations at Steps S22 and S24 in FIG. 3, the operation control unit 46d performs an analysis-processing-finishing determining operation (Step S322) and a voltage-waveform-recording stopping operation (Step S324).

Given below is the description with reference to FIG. 22 about the malfunctioning identification processing illustrated in FIG. 21. As illustrated in FIG. 22, the malfunctioning identifying unit 346f obtains from the detecting unit 246e the detection result regarding anomalous values in the waveforms (Step S332) and obtains the time chart of each component stored in the memory unit 54 (Step S334).

Subsequently, the malfunctioning identifying unit 346f compares the detection result regarding anomalous values and the time chart of each component and identifies components, from among the components of the analyzer 301, that were operating during the measurement period of a voltage value determined to be an anomalous value by the detecting unit 246e (Step S336). Herein, if the components operating during the measurement period of a voltage value determined to be an anomalous value by the detecting unit 246e malfunction and cause shaking of the specimen that does not happen under normal conditions, then it can be inferred that anomaly has occurred in the measurement values of the measuring cell 33.

For example, as illustrated in the waveform chart W1 in FIG. 23; when the detecting unit 246e determines that a voltage value measured during a time period T21 is anomalous, then the malfunctioning identifying unit 346f refers to the time chart diagram T1 and determines which components were operating during the time period T21. By referring to the time chart diagram T1, the malfunctioning identifying unit 346f determines that the Perista pump 14 controlling the pumping of the reference solution and the stir bar 38 were operating during the time period T21 as illustrated by arrows Y31 to Y33. In the case illustrated in FIG. 23, since no component other than the Perista pump 14 and the stir bar 38 were operating during the time period T21, it can be inferred that the operations of the Perista pump 14 and the stir bar 38 are attributable to the anomaly in a voltage value measured during the time period T21. Thus, as illustrated by arrows Y35 and Y36, the malfunctioning identifying unit 346f determines that the anomaly in a voltage value measured during the time period T21 in the waveform chart W1 is caused by the malfunctioning of the Perista pump 14 and the stir bar 38. That is, the malfunctioning identifying unit 346f identifies the Perista pump 14 and the stir bar 38 as the components that are likely to have malfunctioned.

Subsequently, the malfunctioning identifying unit 346f determines that the components operating during the measurement period of a voltage value determined to be anomalous values by the detecting unit 246e are likely to have malfunctioned (Step S338) and outputs the malfunctioning identification result (Step S340). The operation control unit 46d then causes the output unit 53 to output the determination result of the malfunctioning identifying unit 346f so that a notice regarding the components that are likely to have malfunctioned is given. For example, as illustrated in FIG. 24, the operation control unit 46d ensures that an error message M31 is displayed on the display unit 52 indicating that the Perista pump, that is, a reference solution supplying pump and the stir bar 38, that is, a stirring system are likely to have malfunctioned. By checking the error message M31, the person in charge for maintenance and management of the analyzer 301 is able to understand about the components of the analyzer 301 that are likely to have malfunctioned without having to personally analyze the same.

In this way, in the analyzer 301, anomalous values are detected from waveforms indicating the time variation in voltage values measured by a measuring cell and components attributable to the occurrence of the anomalous values are identified in the analyzer. That enables achieving further reduction in the burden on the person in charge for maintenance and management while performing malfunctioning identification.

Meanwhile, the analyzers 1, 201, and 301 respectively described in the first to third embodiments can be implemented by executing a program written in advance in a computer system. The computer system implements the operations of an analyzer by reading the program recorded in a predetermined recording medium and executing the same. The predetermined recording medium can be any recording medium in which programs readable by the computer system can be recorded. The predetermined recording medium can be a "portable physical medium" such as a flexible disk (FD), a CD-ROM, an MO disk, a DVD, an magneto optical disk, or an IC card, or can be a "communication medium" such as hard disk drive (HDD) that can be disposed inside or outside of the computer system and that holds the program for a short period of time at the time of transmission. Besides, the computer system can obtain the program from an administrative server or another computer connected via a network and executes the obtained program to implement the operations of an analyzer.

## Claims

**1.** An analyzer that, based on a voltage value of an ion selective electrode making contact with a liquid specimen, analyzes concentration of an electrolyte present in the liquid specimen, the analyzer comprising:

a measuring unit that continuously measures the voltage value;

a memory unit that stores therein a waveform indicating time variation in the voltage value measured by the measuring unit and reference information used in identifying malfunctioning in the analyzer;
an output unit that outputs an analysis result of the liquid specimen; and
a control unit that causes the output unit to output the waveform and the reference information stored in the memory unit.

**2.** The analyzer according to claim 1, wherein
as the reference information, the memory unit stores therein a time chart indicating an operation timing of each component of the analyzer, and
the control unit causes the output unit to output, out of the time chart stored in the memory unit, a time chart corresponding to a measurement period of the waveform that the output unit outputs.

**3.** The analyzer according to claim 1, wherein
as the reference information, the memory unit stores therein an analysis result of each liquid specimen, and
the control unit causes the output unit to output, out of the analysis result stored in the memory unit, an analysis result of a liquid specimen that is analyzed during a measurement period of the waveform that the output unit outputs.

**4.** The analyzer according to any one of claims 1 to 3, wherein, after a predetermined time interval, the control unit erases the waveform stored in the memory unit and starts newly recording the waveform in the memory unit.

**5.** The analyzer according to claim 4, wherein, each time a calibration processing is performed, the control unit erases the waveform stored in the memory unit and starts newly recording the waveform in the memory unit.

**6.** The analyzer according to any one of claims 1 to 5, further comprising an input unit through which instruction information regarding an instruction of outputting the waveform is input, wherein
when the instruction information is input through the input unit, the control unit causes the output unit to output the waveform and the reference information.

**7.** The analyzer according to any one of claims 1 to 5, wherein, when anomaly is found in an analysis result of the liquid specimen, the control unit causes the output unit to output the waveform and the reference information.

**8.** The analyzer according to any one of claims 1 to 7, further comprising a detecting unit that detects an anomalous value from each voltage value forming the waveform, wherein
when a voltage value to be verified differs from a voltage value measured at a predetermined time earlier or later than a measurement time of the voltage value to be verified by a difference value that exceeds a predetermined threshold value, the detecting unit determines that the voltage value to be verified is an anomalous value, and
out of the waveform stored in the memory unit, the control unit causes the output unit to output a portion that includes the voltage value determined to be an anomalous value by the detecting unit.

**9.** The analyzer according to claim 8, wherein, out of reference information that the output unit outputs, the control unit causes the output unit to output in a predetermined output method a portion that corresponds to a measurement time of the voltage value determined to be an anomalous value by the detecting unit.

**10.** The analyzer according to claim 8, further comprising a malfunctioning identifying unit that refers to a detection result of the detecting unit and a time chart of each component of the analyzer, and determines that a component operating during a measurement time of the voltage value determined to be an anomalous value by the detecting unit is likely to have malfunctioned, wherein
the control unit causes the output unit to output a determination result of the malfunctioning identifying unit.

FIG.1

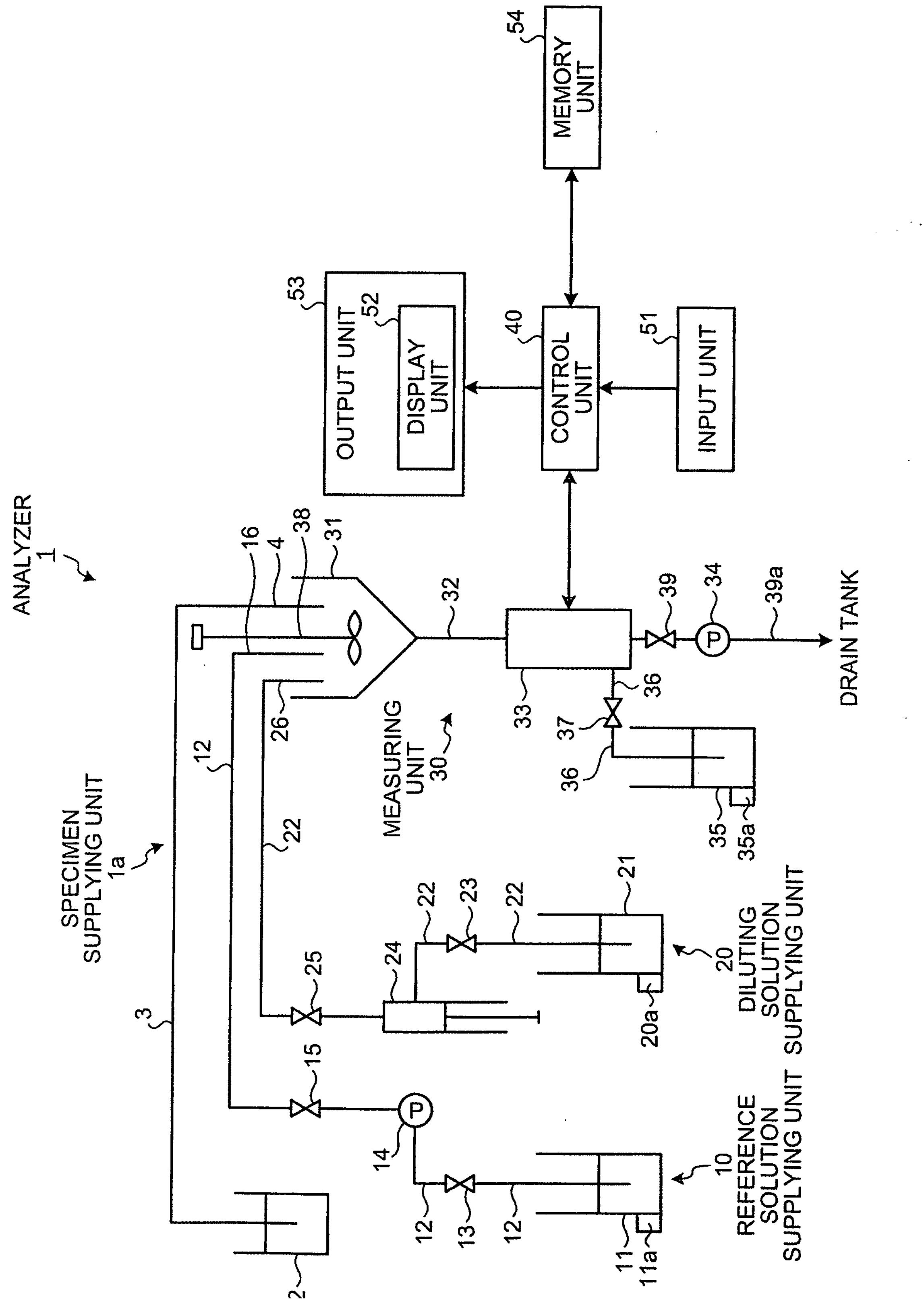

ANALYZER
1
SPECIMEN SUPPLYING UNIT
1a
MEASURING UNIT
30
OUTPUT UNIT
DISPLAY UNIT
CONTROL UNIT
INPUT UNIT
MEMORY UNIT
DRAIN TANK
DILUTING SOLUTION SUPPLYING UNIT
20
REFERENCE SOLUTION SUPPLYING UNIT
10

FIG.2

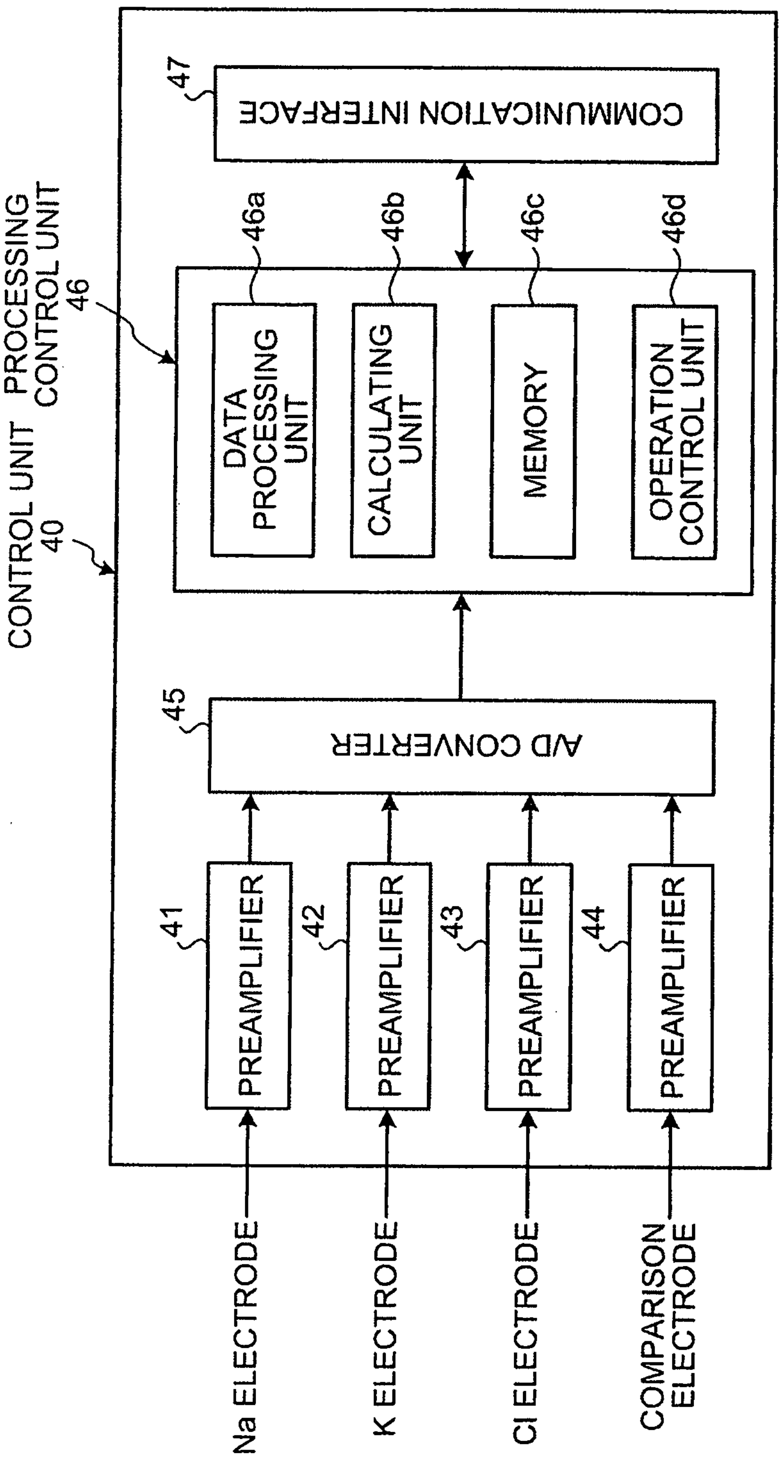
CONTROL UNIT
40
PROCESSING CONTROL UNIT
46
DATA PROCESSING UNIT
46a
CALCULATING UNIT
46b
MEMORY
46c
OPERATION CONTROL UNIT
46d
COMMUNICATION INTERFACE
47
A/D CONVERTER
45
PREAMPLIFIER
41
PREAMPLIFIER
42
PREAMPLIFIER
43
PREAMPLIFIER
44
Na ELECTRODE
K ELECTRODE
Cl ELECTRODE
COMPARISON ELECTRODE

FIG.3

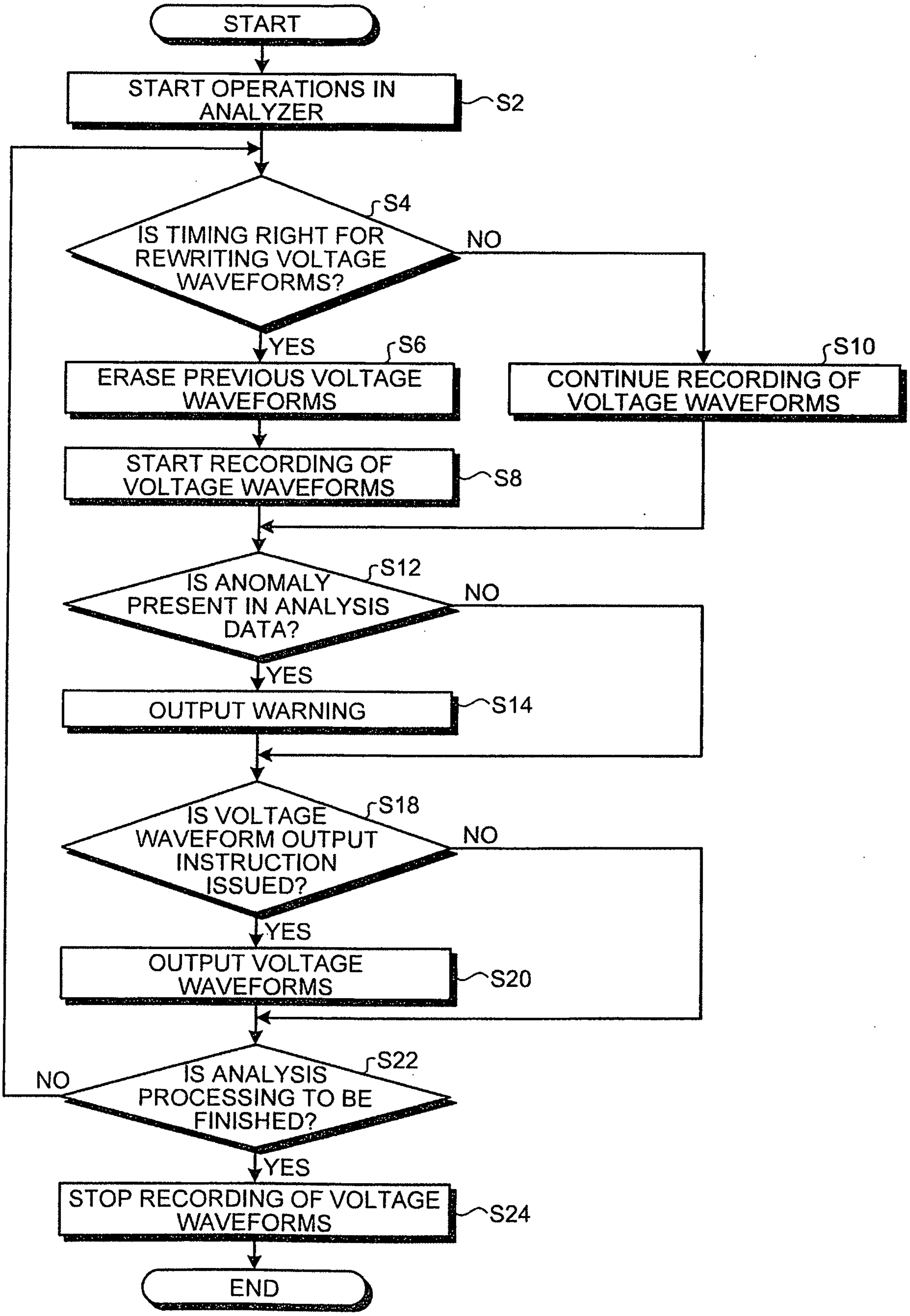
START
START OPERATIONS IN ANALYZER
S2
IS TIMING RIGHT FOR REWRITING VOLTAGE WAVEFORMS?
S4
NO
YES
ERASE PREVIOUS VOLTAGE WAVEFORMS
S6
CONTINUE RECORDING OF VOLTAGE WAVEFORMS
S10
START RECORDING OF VOLTAGE WAVEFORMS
S8
IS ANOMALY PRESENT IN ANALYSIS DATA?
S12
NO
YES
OUTPUT WARNING
S14
IS VOLTAGE WAVEFORM OUTPUT INSTRUCTION ISSUED?
S18
NO
YES
OUTPUT VOLTAGE WAVEFORMS
S20
IS ANALYSIS PROCESSING TO BE FINISHED?
S22
NO
YES
STOP RECORDING OF VOLTAGE WAVEFORMS
S24
END

FIG.4

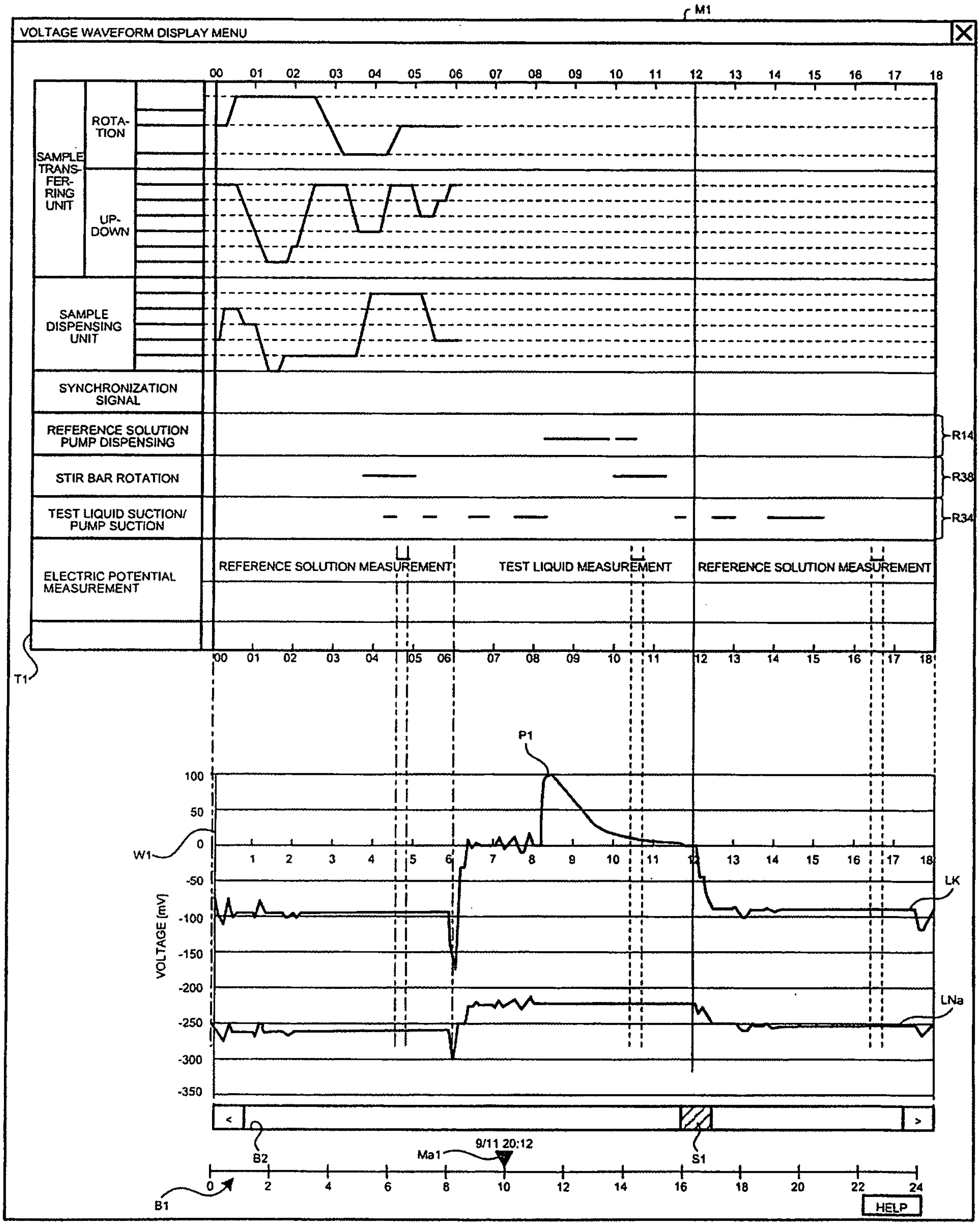
M1
VOLTAGE WAVEFORM DISPLAY MENU
SAMPLE TRANSFERRING UNIT
ROTATION
UP-DOWN
SAMPLE DISPENSING UNIT
SYNCHRONIZATION SIGNAL
REFERENCE SOLUTION PUMP DISPENSING
STIR BAR ROTATION
TEST LIQUID SUCTION/ PUMP SUCTION
ELECTRIC POTENTIAL MEASUREMENT
REFERENCE SOLUTION MEASUREMENT
TEST LIQUID MEASUREMENT
REFERENCE SOLUTION MEASUREMENT
R14
R38
R34
T1
P1
W1
LK
LNa
VOLTAGE [mV]
B2
S1
Ma1
9/11 20:12
B1
HELP

FIG.5

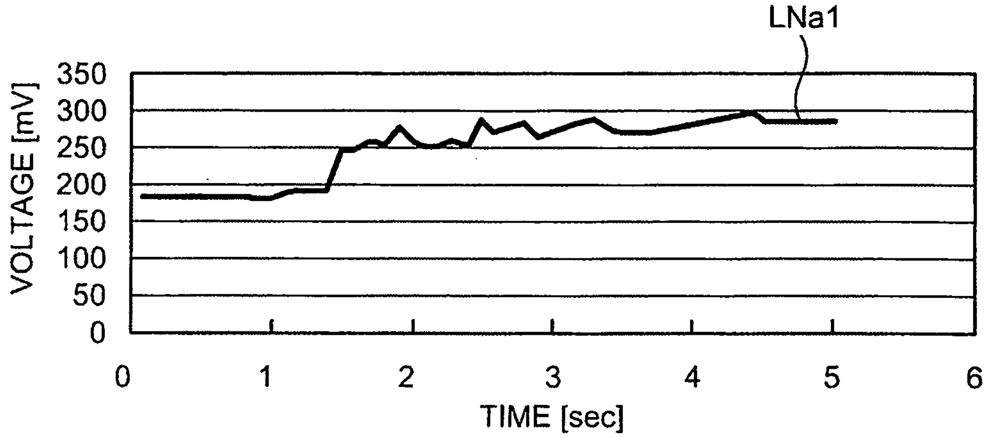
LNa1
VOLTAGE [mV]
350
300
250
200
150
100
50
0
0
1
2
3
4
5
6
TIME [sec]

FIG.6

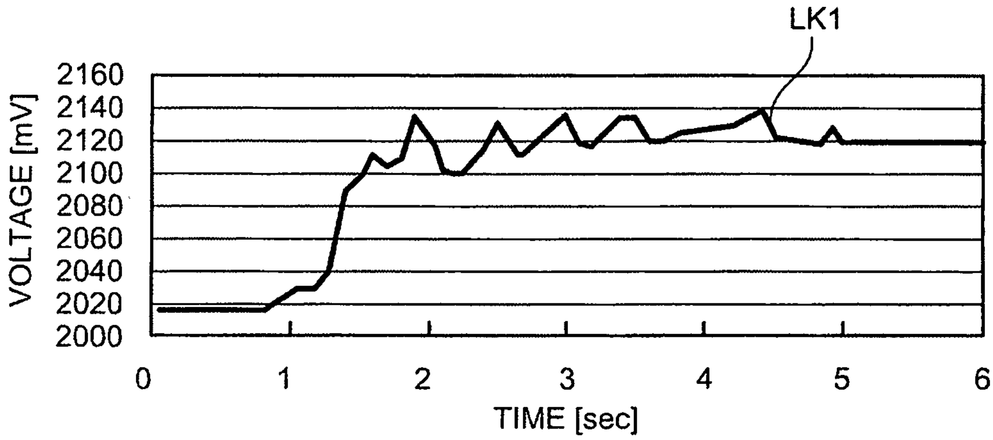
LK1
VOLTAGE [mV]
2160
2140
2120
2100
2080
2060
2040
2020
2000
0
1
2
3
4
5
6
TIME [sec]

FIG.7

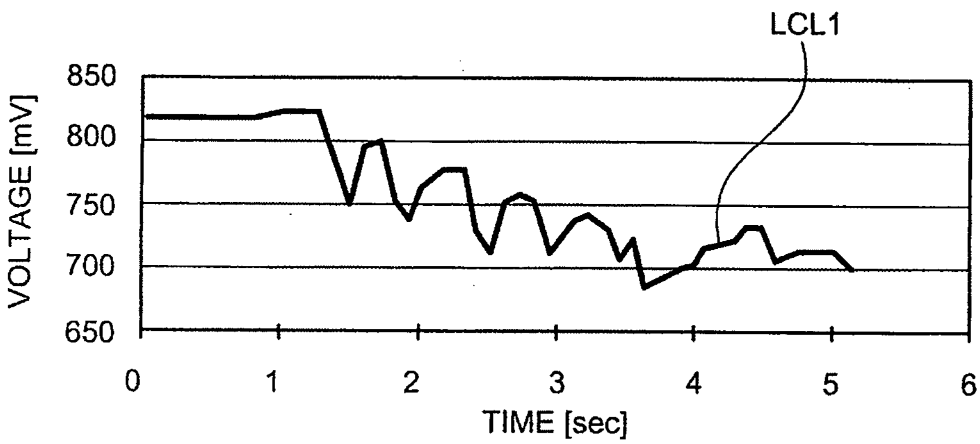

FIG.8

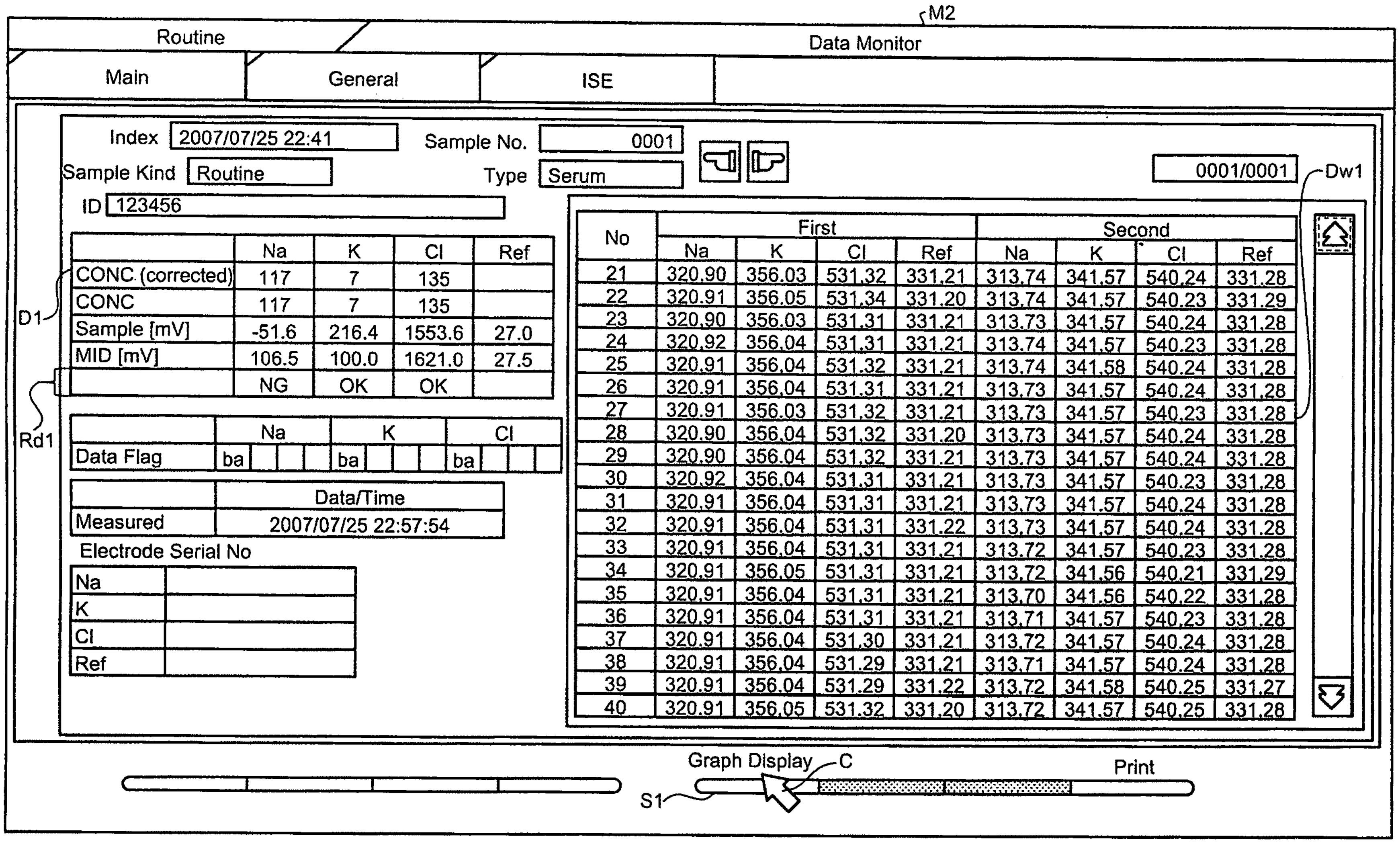
M2
Routine
Data Monitor
Main
General
ISE
Index 2007/07/25 22:41
Sample No. 0001
Sample Kind Routine
Type Serum
ID 123456
0001/0001
Dw1
D1
Rd1

| | Na | K | Cl | Ref |
|---|---|---|---|---|
| CONC (corrected) | 117 | 7 | 135 | |
| CONC | 117 | 7 | 135 | |
| Sample [mV] | -51.6 | 216.4 | 1553.6 | 27.0 |
| MID [mV] | 106.5 | 100.0 | 1621.0 | 27.5 |
| | NG | OK | OK | |

| | Na | K | Cl |
|---|---|---|---|
| Data Flag | ba | ba | ba |

| | Data/Time |
|---|---|
| Measured | 2007/07/25 22:57:54 |

Electrode Serial No

| | |
|---|---|
| Na | |
| K | |
| Cl | |
| Ref | |

| No | First Na | First K | First Cl | First Ref | Second Na | Second K | Second Cl | Second Ref |
|---|---|---|---|---|---|---|---|---|
| 21 | 320.90 | 356.03 | 531.32 | 331.21 | 313.74 | 341.57 | 540.24 | 331.28 |
| 22 | 320.91 | 356.05 | 531.34 | 331.20 | 313.74 | 341.57 | 540.23 | 331.29 |
| 23 | 320.90 | 356.03 | 531.31 | 331.21 | 313.73 | 341.57 | 540.24 | 331.28 |
| 24 | 320.92 | 356.04 | 531.31 | 331.21 | 313.74 | 341.57 | 540.23 | 331.28 |
| 25 | 320.91 | 356.04 | 531.32 | 331.21 | 313.74 | 341.58 | 540.24 | 331.28 |
| 26 | 320.91 | 356.04 | 531.31 | 331.21 | 313.73 | 341.57 | 540.24 | 331.28 |
| 27 | 320.91 | 356.03 | 531.32 | 331.21 | 313.73 | 341.57 | 540.23 | 331.28 |
| 28 | 320.90 | 356.04 | 531.32 | 331.20 | 313.73 | 341.57 | 540.24 | 331.28 |
| 29 | 320.90 | 356.04 | 531.32 | 331.21 | 313.73 | 341.57 | 540.24 | 331.28 |
| 30 | 320.92 | 356.04 | 531.31 | 331.21 | 313.73 | 341.57 | 540.23 | 331.28 |
| 31 | 320.91 | 356.04 | 531.31 | 331.21 | 313.73 | 341.57 | 540.24 | 331.28 |
| 32 | 320.91 | 356.04 | 531.31 | 331.22 | 313.73 | 341.57 | 540.24 | 331.28 |
| 33 | 320.91 | 356.04 | 531.31 | 331.21 | 313.72 | 341.57 | 540.23 | 331.28 |
| 34 | 320.91 | 356.05 | 531.31 | 331.21 | 313.72 | 341.56 | 540.21 | 331.29 |
| 35 | 320.91 | 356.04 | 531.31 | 331.21 | 313.70 | 341.56 | 540.22 | 331.28 |
| 36 | 320.91 | 356.04 | 531.31 | 331.21 | 313.71 | 341.57 | 540.23 | 331.28 |
| 37 | 320.91 | 356.04 | 531.30 | 331.21 | 313.72 | 341.57 | 540.24 | 331.28 |
| 38 | 320.91 | 356.04 | 531.29 | 331.21 | 313.71 | 341.57 | 540.24 | 331.28 |
| 39 | 320.91 | 356.04 | 531.29 | 331.22 | 313.72 | 341.58 | 540.25 | 331.27 |
| 40 | 320.91 | 356.05 | 531.32 | 331.20 | 313.72 | 341.57 | 540.25 | 331.28 |

Graph Display
C
Print
S1

FIG.9

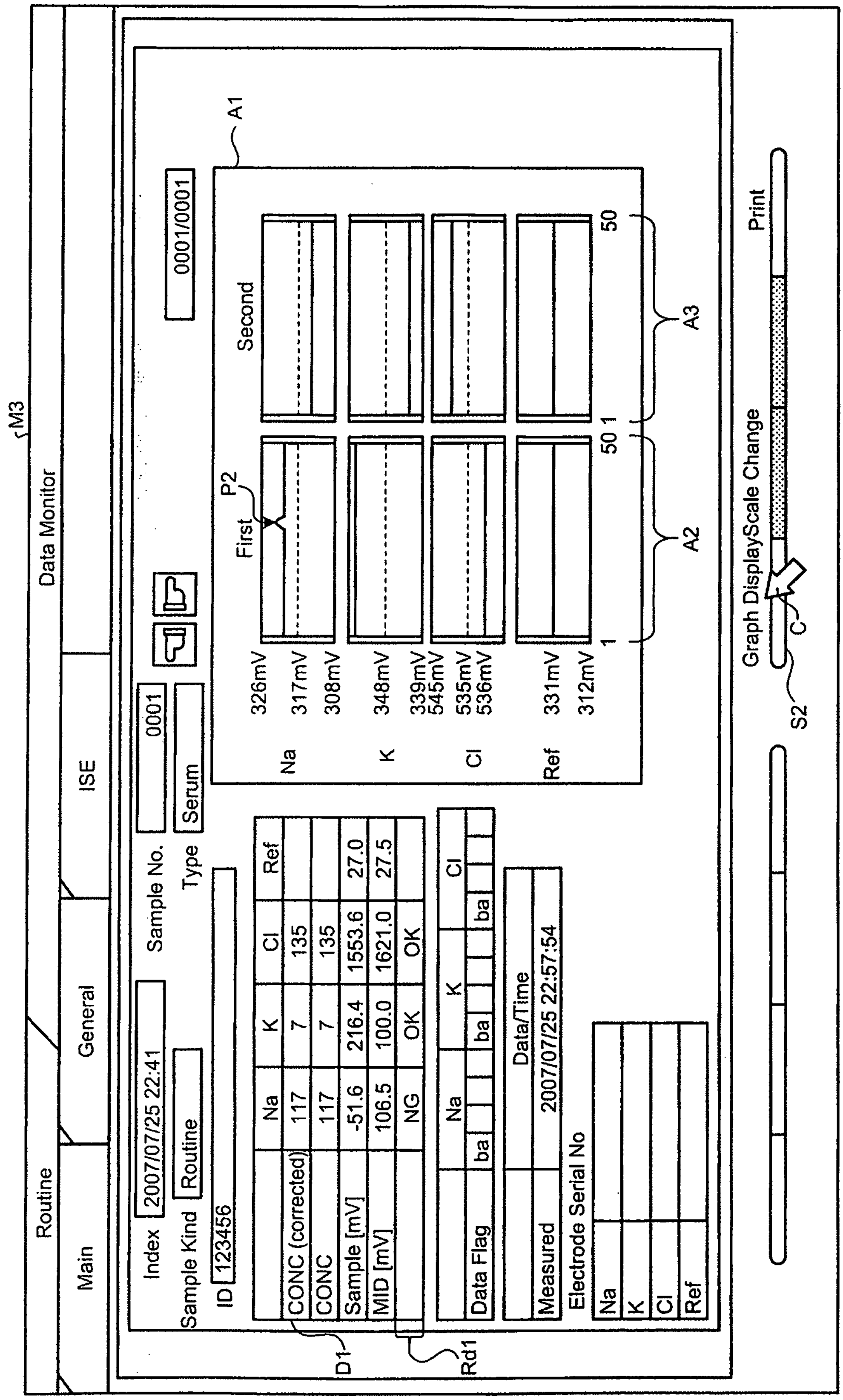
M3
Routine
Main
General
ISE
Data Monitor
Index 2007/07/25 22:41
Sample No. 0001
Sample Kind Routine
Type Serum
ID 123456
0001/0001
Na K Cl Ref
CONC (corrected) 117 7 135
CONC 117 7 135
Sample [mV] -51.6 216.4 1553.6 27.0
MID [mV] 106.5 100.0 1621.0 27.5
NG OK OK
Data Flag ba ba ba
Data/Time
Measured 2007/07/25 22:57:54
Electrode Serial No
Na
K
Cl
Ref
A1
First
Second
P2
326mV
317mV
308mV
348mV
339mV
545mV
535mV
536mV
331mV
312mV
1
50 1
50
A2
A3
Graph DisplayScale Change
Print
C
S2
D1
Rd1

FIG.10

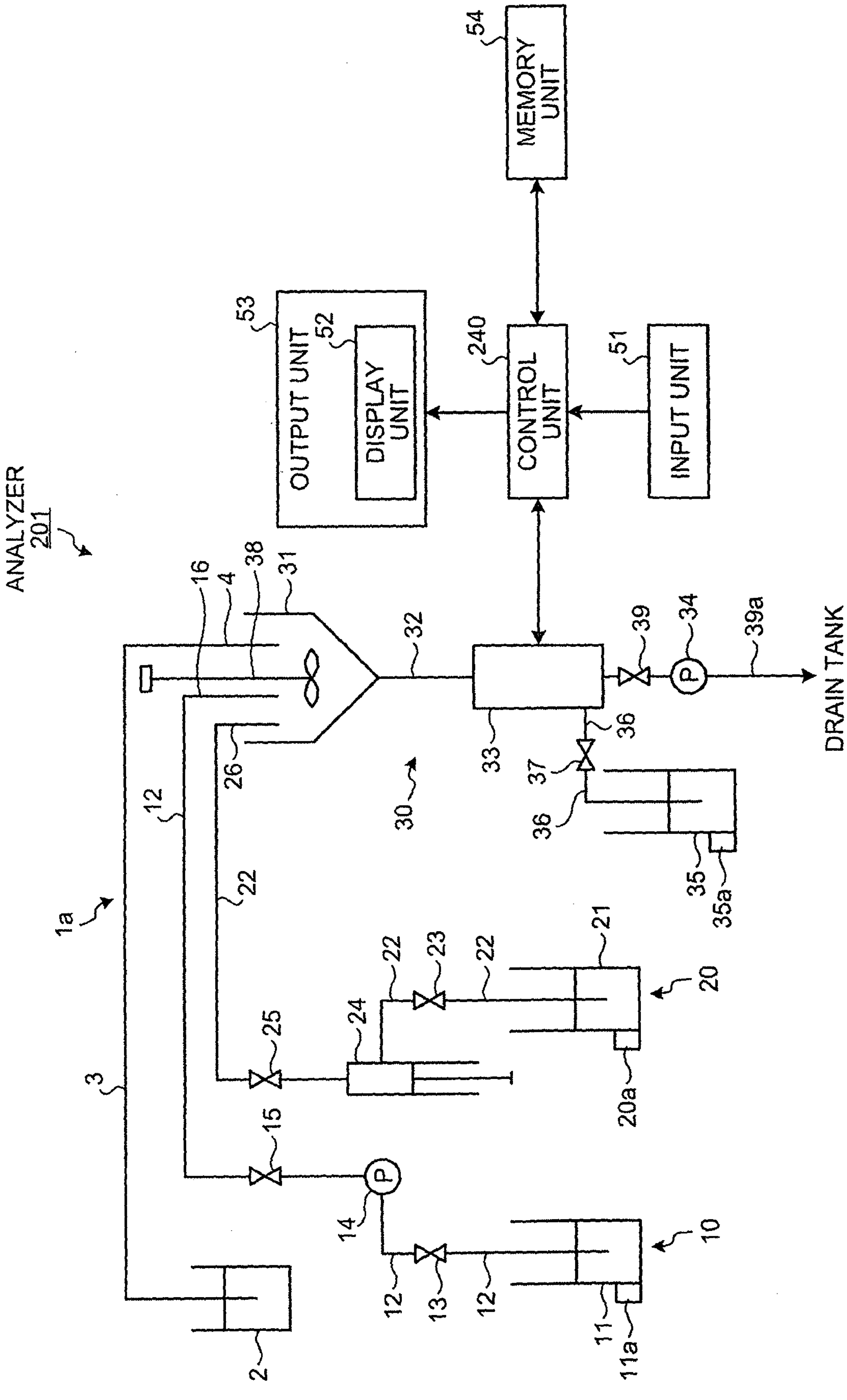
ANALYZER
201
1a
2
3
4
10
11
11a
12
13
14
15
16
20
20a
21
22
23
24
25
26
30
31
32
33
34
35
35a
36
37
38
39
39a
DRAIN TANK
OUTPUT UNIT
53
DISPLAY UNIT
52
CONTROL UNIT
240
INPUT UNIT
51
MEMORY UNIT
54

FIG.11

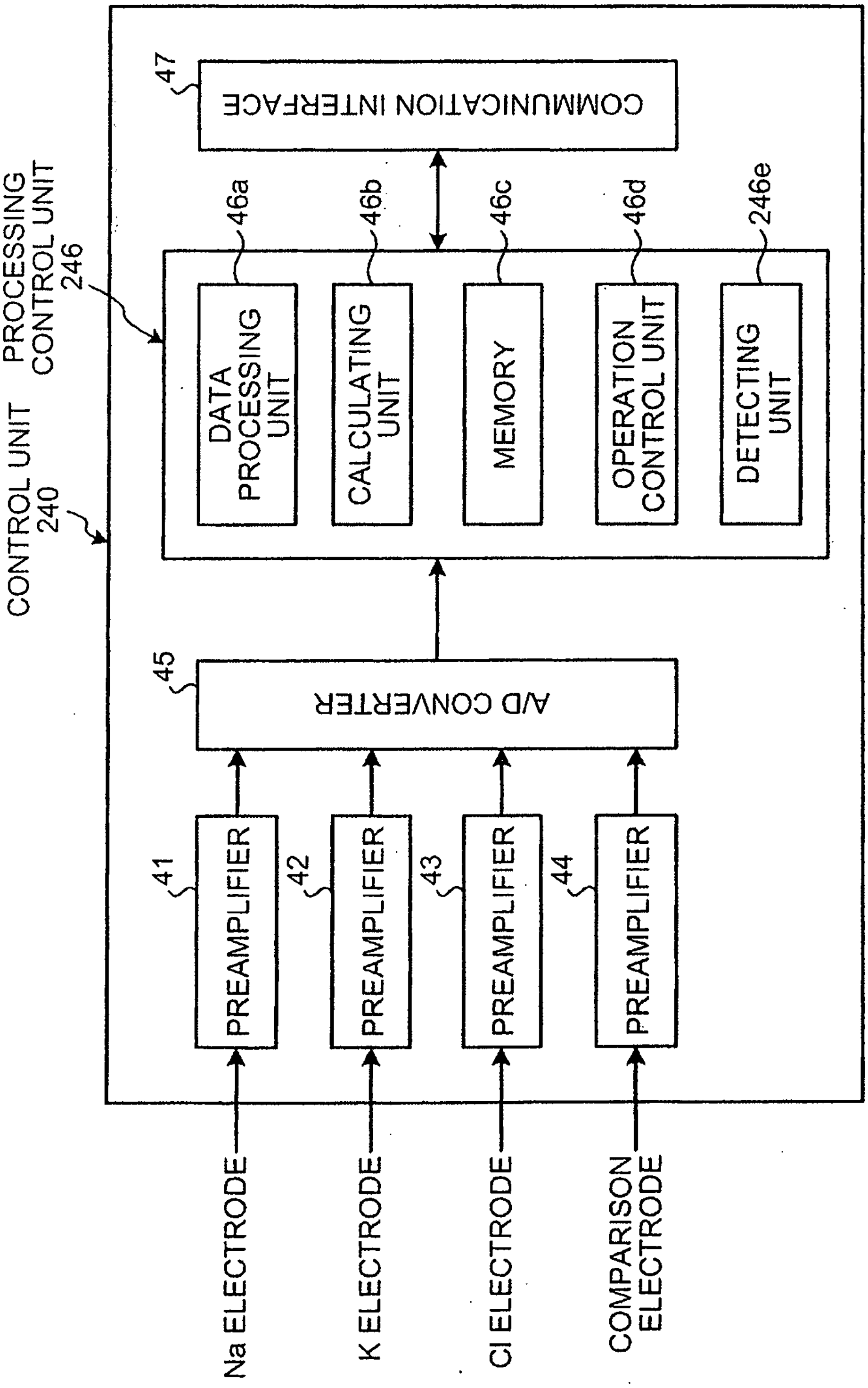
CONTROL UNIT
240
PROCESSING
CONTROL UNIT
246
47
COMMUNICATION INTERFACE
46a
DATA
PROCESSING
UNIT
46b
CALCULATING
UNIT
46c
MEMORY
46d
OPERATION
CONTROL UNIT
246e
DETECTING
UNIT
45
A/D CONVERTER
41
PREAMPLIFIER
42
PREAMPLIFIER
43
PREAMPLIFIER
44
PREAMPLIFIER
Na ELECTRODE
K ELECTRODE
Cl ELECTRODE
COMPARISON
ELECTRODE

FIG.12

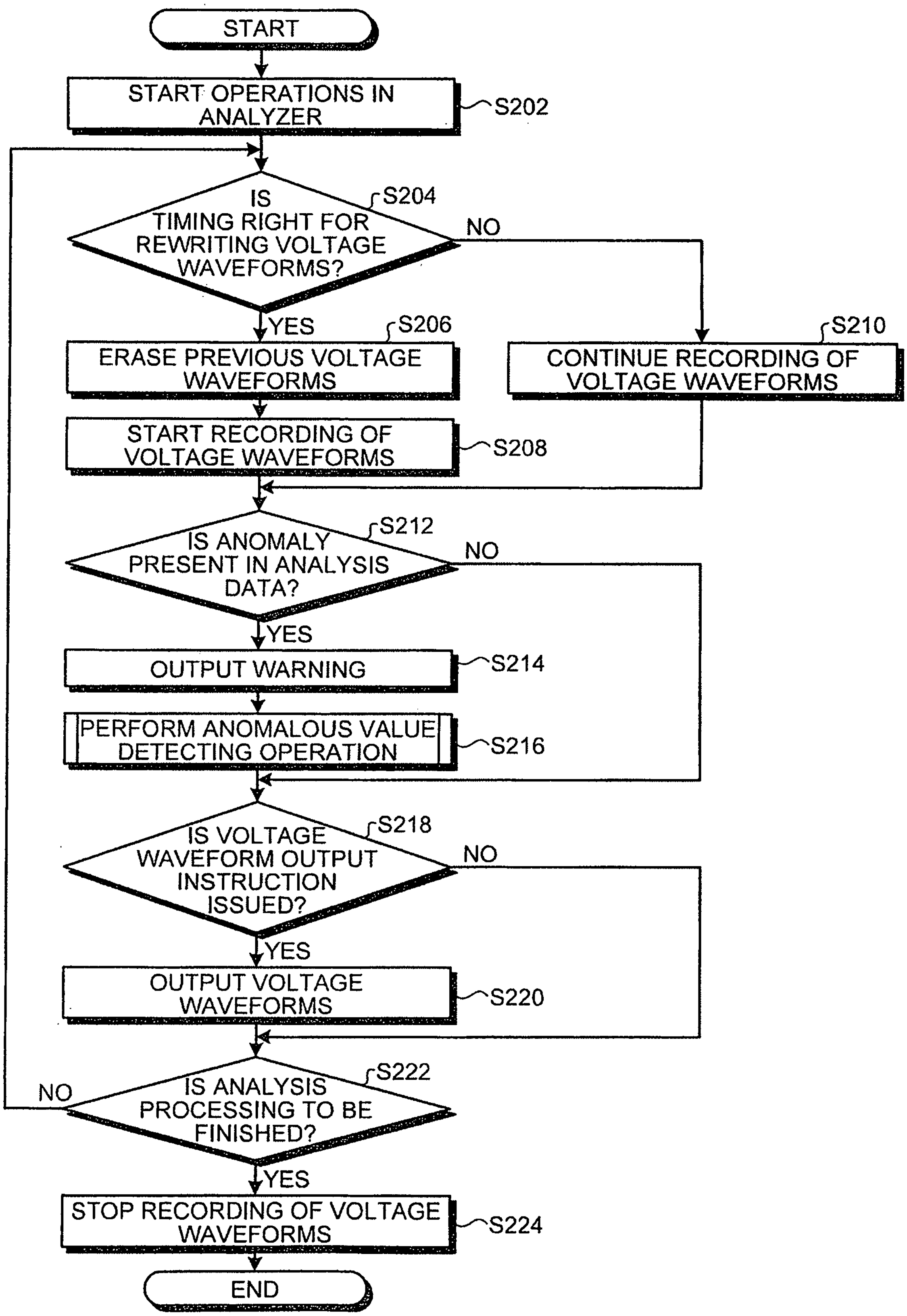
START
START OPERATIONS IN ANALYZER
S202
IS TIMING RIGHT FOR REWRITING VOLTAGE WAVEFORMS?
S204
NO
YES
ERASE PREVIOUS VOLTAGE WAVEFORMS
S206
CONTINUE RECORDING OF VOLTAGE WAVEFORMS
S210
START RECORDING OF VOLTAGE WAVEFORMS
S208
IS ANOMALY PRESENT IN ANALYSIS DATA?
S212
NO
YES
OUTPUT WARNING
S214
PERFORM ANOMALOUS VALUE DETECTING OPERATION
S216
IS VOLTAGE WAVEFORM OUTPUT INSTRUCTION ISSUED?
S218
NO
YES
OUTPUT VOLTAGE WAVEFORMS
S220
IS ANALYSIS PROCESSING TO BE FINISHED?
S222
NO
YES
STOP RECORDING OF VOLTAGE WAVEFORMS
S224
END

FIG.13

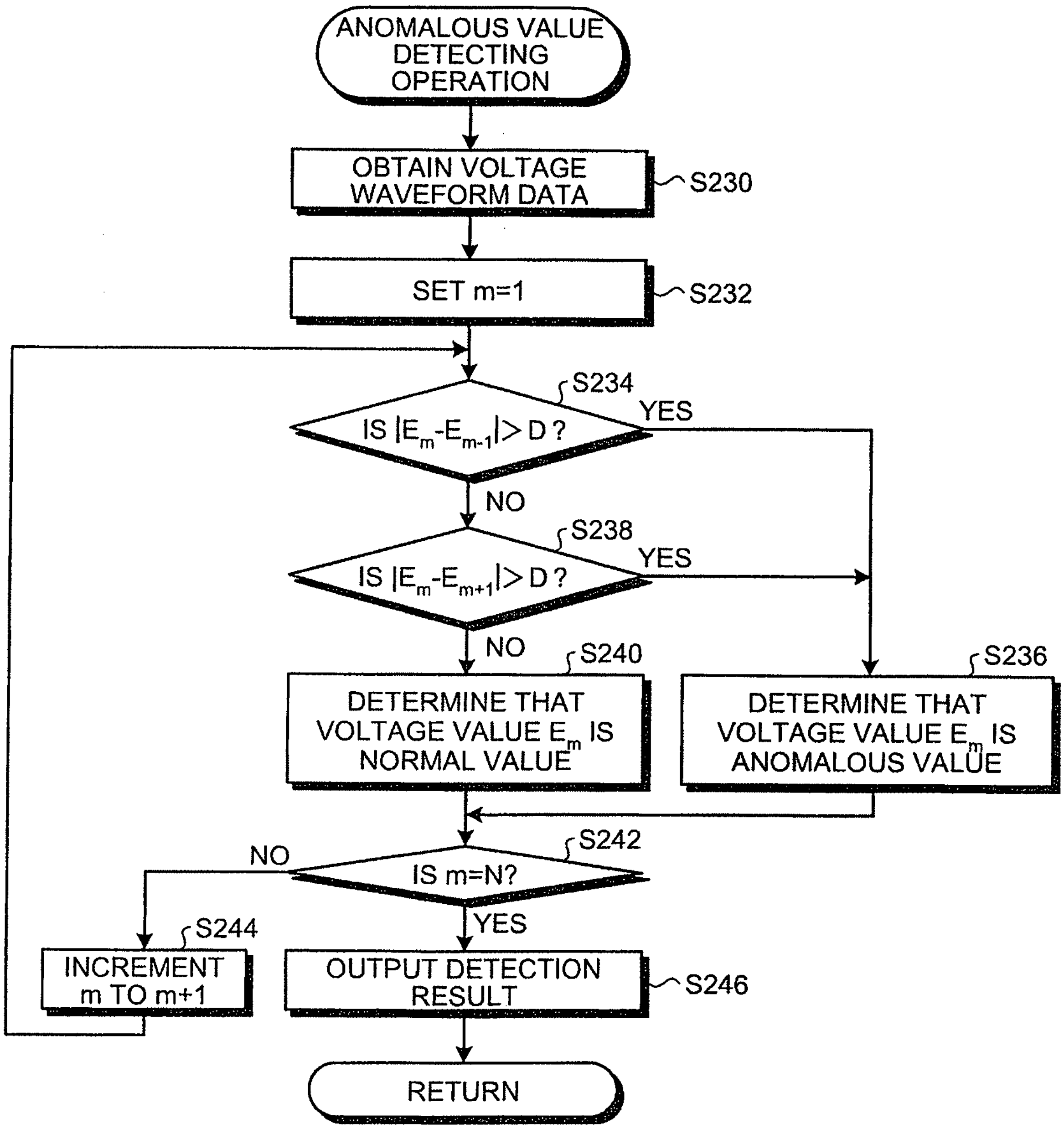
ANOMALOUS VALUE DETECTING OPERATION
OBTAIN VOLTAGE WAVEFORM DATA
S230
SET m=1
S232
S234
IS $|E_m-E_{m-1}|>D$ ?
YES
NO
S238
IS $|E_m-E_{m+1}|>D$ ?
YES
NO
S240
DETERMINE THAT VOLTAGE VALUE $E_m$ IS NORMAL VALUE
S236
DETERMINE THAT VOLTAGE VALUE $E_m$ IS ANOMALOUS VALUE
S242
IS m=N?
NO
YES
S244
INCREMENT m TO m+1
OUTPUT DETECTION RESULT
S246
RETURN

FIG.14

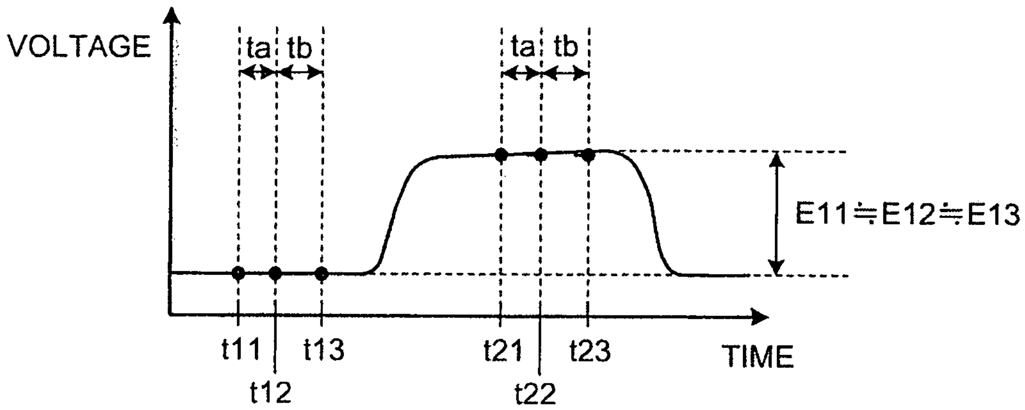
VOLTAGE
ta
tb
ta
tb
E11≒E12≒E13
t11
t12
t13
t21
t22
t23
TIME

FIG.15

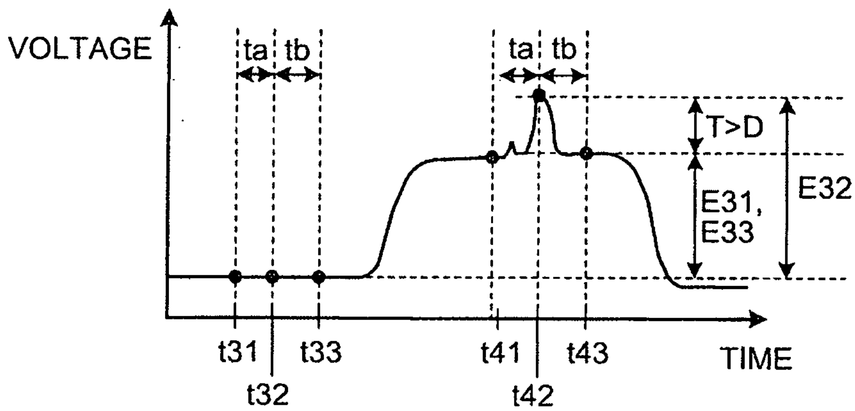
VOLTAGE
ta
tb
ta
tb
T>D
E31,
E33
E32
t31
t32
t33
t41
t42
t43
TIME

FIG.16

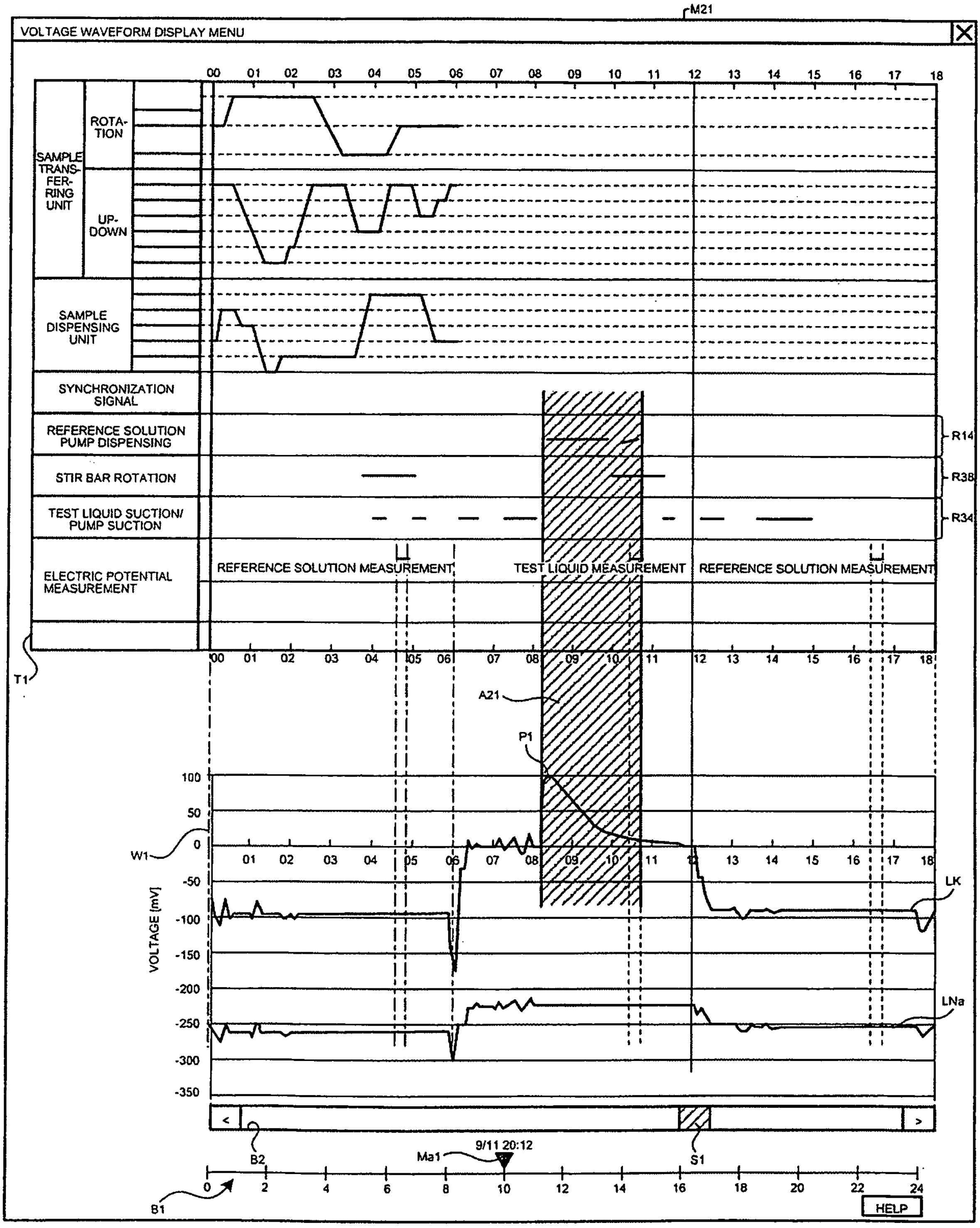
M21
VOLTAGE WAVEFORM DISPLAY MENU
SAMPLE TRANS-FER-RING UNIT
ROTA-TION
UP-DOWN
SAMPLE DISPENSING UNIT
SYNCHRONIZATION SIGNAL
REFERENCE SOLUTION PUMP DISPENSING
STIR BAR ROTATION
TEST LIQUID SUCTION/ PUMP SUCTION
ELECTRIC POTENTIAL MEASUREMENT
REFERENCE SOLUTION MEASUREMENT
TEST LIQUID MEASUREMENT
REFERENCE SOLUTION MEASUREMENT
R14
R38
R34
T1
A21
P1
W1
LK
LNa
VOLTAGE [mV]
B2
Ma1
9/11 20:12
S1
B1
HELP

FIG.17

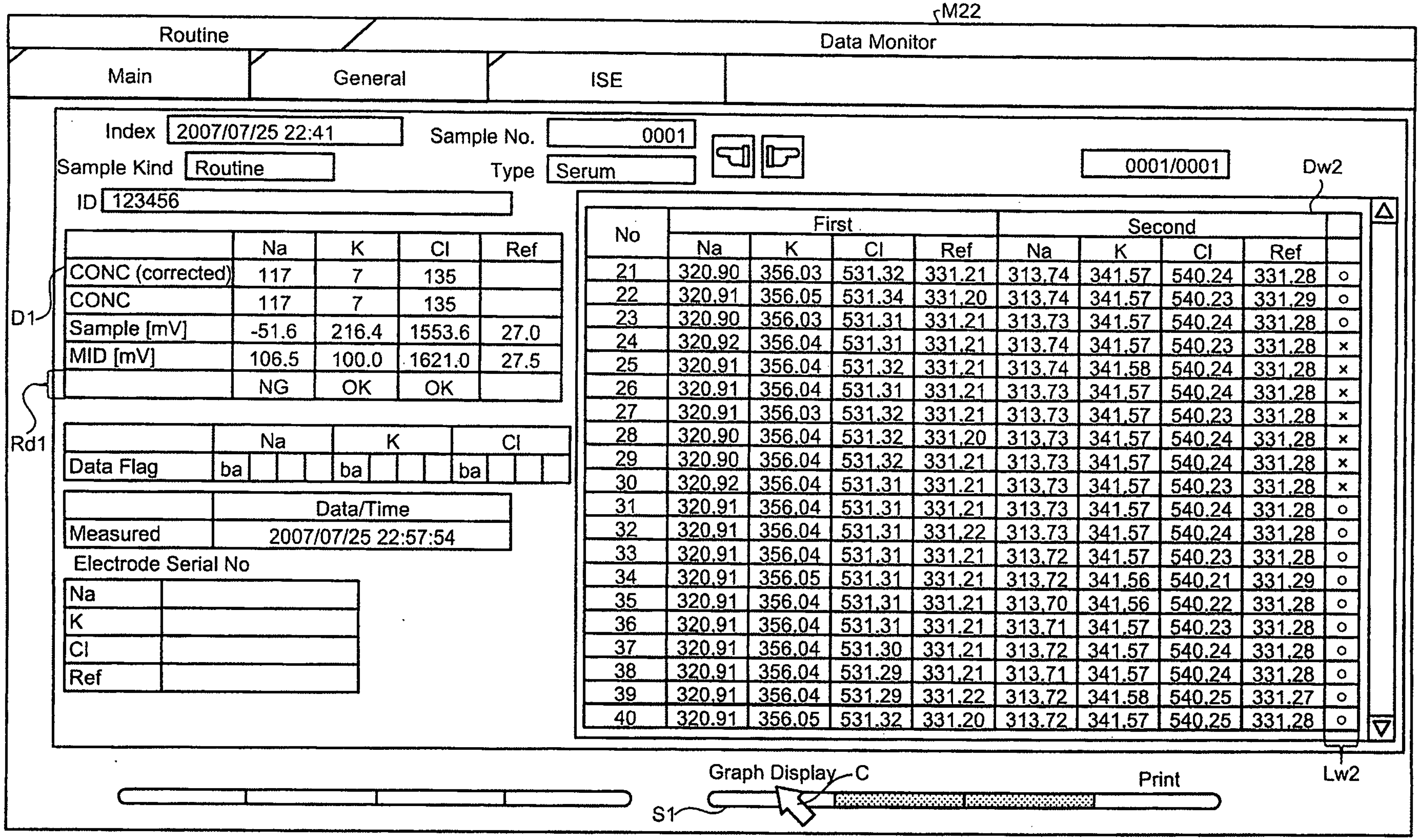
M22
Routine
Data Monitor
Main
General
ISE
Index 2007/07/25 22:41
Sample No. 0001
Sample Kind Routine
Type Serum
ID 123456
0001/0001
Dw2
Na K Cl Ref
CONC (corrected) 117 7 135
CONC 117 7 135
Sample [mV] -51.6 216.4 1553.6 27.0
MID [mV] 106.5 100.0 1621.0 27.5
NG OK OK
D1
Rd1
Na K Cl
Data Flag ba ba ba
Data/Time
Measured 2007/07/25 22:57:54
Electrode Serial No
Na
K
Cl
Ref
No
First
Second
Na K Cl Ref Na K Cl Ref
21 320.90 356.03 531.32 331.21 313.74 341.57 540.24 331.28 ○
22 320.91 356.05 531.34 331.20 313.74 341.57 540.23 331.29 ○
23 320.90 356.03 531.31 331.21 313.73 341.57 540.24 331.28 ○
24 320.92 356.04 531.31 331.21 313.74 341.57 540.23 331.28 ×
25 320.91 356.04 531.32 331.21 313.74 341.58 540.24 331.28 ×
26 320.91 356.04 531.31 331.21 313.73 341.57 540.24 331.28 ×
27 320.91 356.03 531.32 331.21 313.73 341.57 540.23 331.28 ×
28 320.90 356.04 531.32 331.20 313.73 341.57 540.24 331.28 ×
29 320.90 356.04 531.32 331.21 313.73 341.57 540.24 331.28 ×
30 320.92 356.04 531.31 331.21 313.73 341.57 540.23 331.28 ×
31 320.91 356.04 531.31 331.21 313.73 341.57 540.24 331.28 ○
32 320.91 356.04 531.31 331.22 313.73 341.57 540.24 331.28 ○
33 320.91 356.04 531.31 331.21 313.72 341.57 540.23 331.28 ○
34 320.91 356.05 531.31 331.21 313.72 341.56 540.21 331.29 ○
35 320.91 356.04 531.31 331.21 313.70 341.56 540.22 331.28 ○
36 320.91 356.04 531.31 331.21 313.71 341.57 540.23 331.28 ○
37 320.91 356.04 531.30 331.21 313.72 341.57 540.24 331.28 ○
38 320.91 356.04 531.29 331.21 313.71 341.57 540.24 331.28 ○
39 320.91 356.04 531.29 331.22 313.72 341.58 540.25 331.27 ○
40 320.91 356.05 531.32 331.20 313.72 341.57 540.25 331.28 ○
Lw2
Graph Display
C
Print
S1

FIG.18

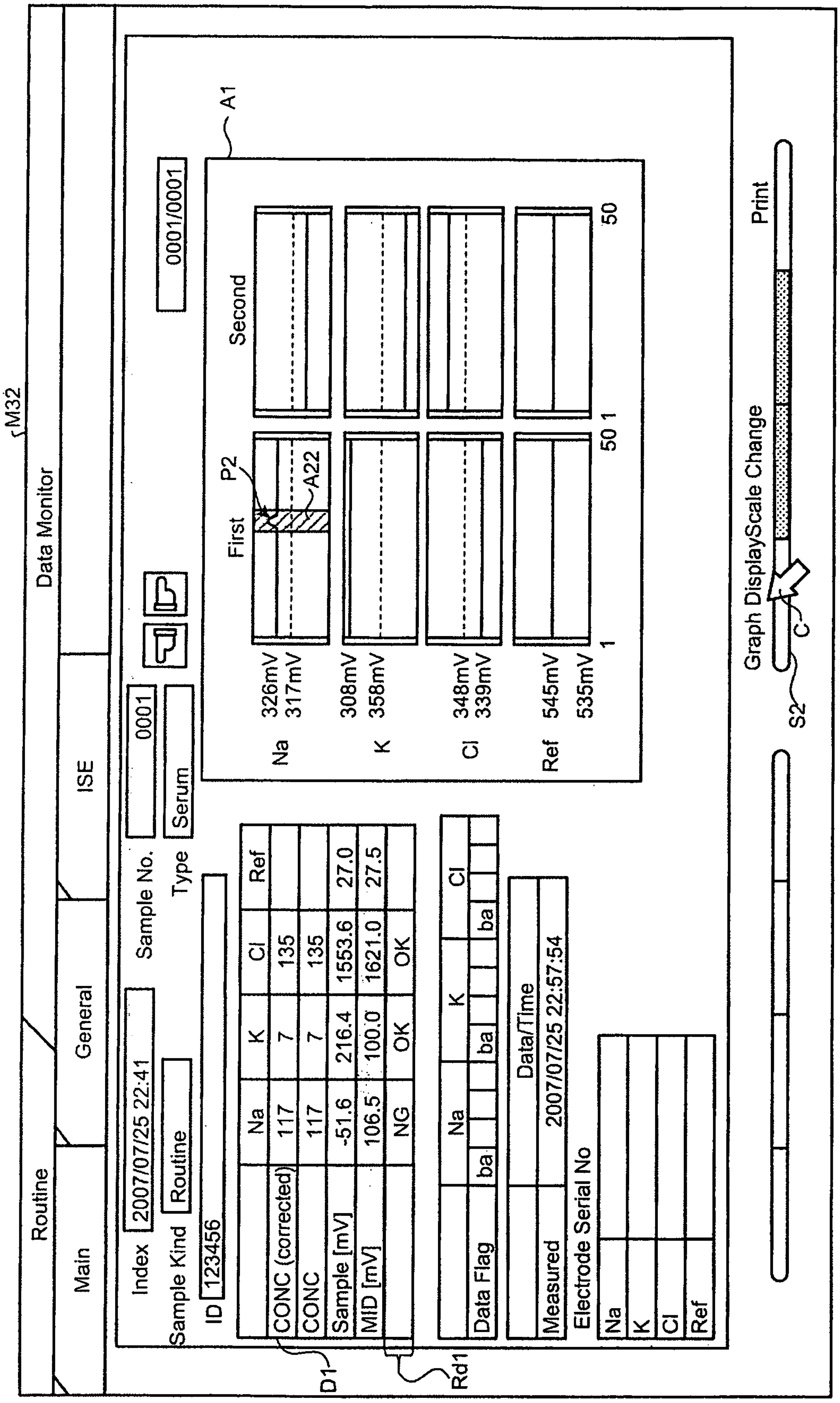

M32
Data Monitor
Routine
Main
General
ISE
Index
2007/07/25 22:41
Sample No.
0001
Sample Kind
Routine
Type
Serum
ID
123456
0001/0001
CONC (corrected)
CONC
Sample [mV]
MID [mV]
Na
K
Cl
Ref
117
7
135
117
7
135
-51.6
216.4
1553.6
27.0
106.5
100.0
1621.0
27.5
NG
OK
OK
Data Flag
ba
ba
ba
Data/Time
Measured
2007/07/25 22:57:54
Electrode Serial No
Na
K
Cl
Ref
A1
First
Second
P2
A22
326mV
317mV
308mV
358mV
348mV
339mV
545mV
535mV
1
50 1
50
Graph DisplayScale Change
Print
C
S2
D1
Rd1

FIG. 19

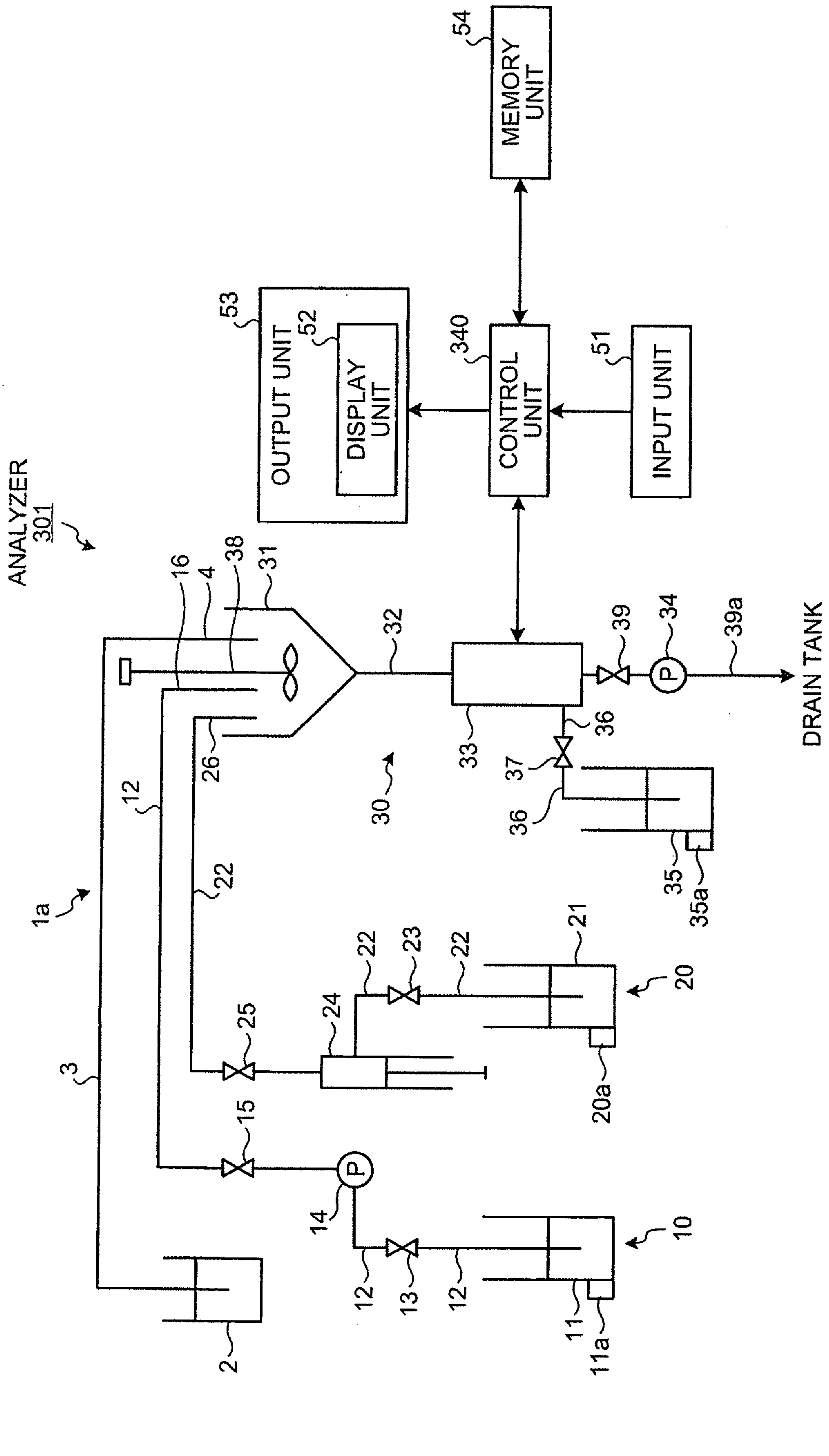
ANALYZER
301
MEMORY UNIT
54
OUTPUT UNIT
53
DISPLAY UNIT
52
CONTROL UNIT
340
INPUT UNIT
51
DRAIN TANK
1a
2
3
4
10
11
11a
12
13
14
15
16
20
20a
21
22
23
24
25
26
30
31
32
33
34
35
35a
36
37
38
39
39a
P

FIG.20

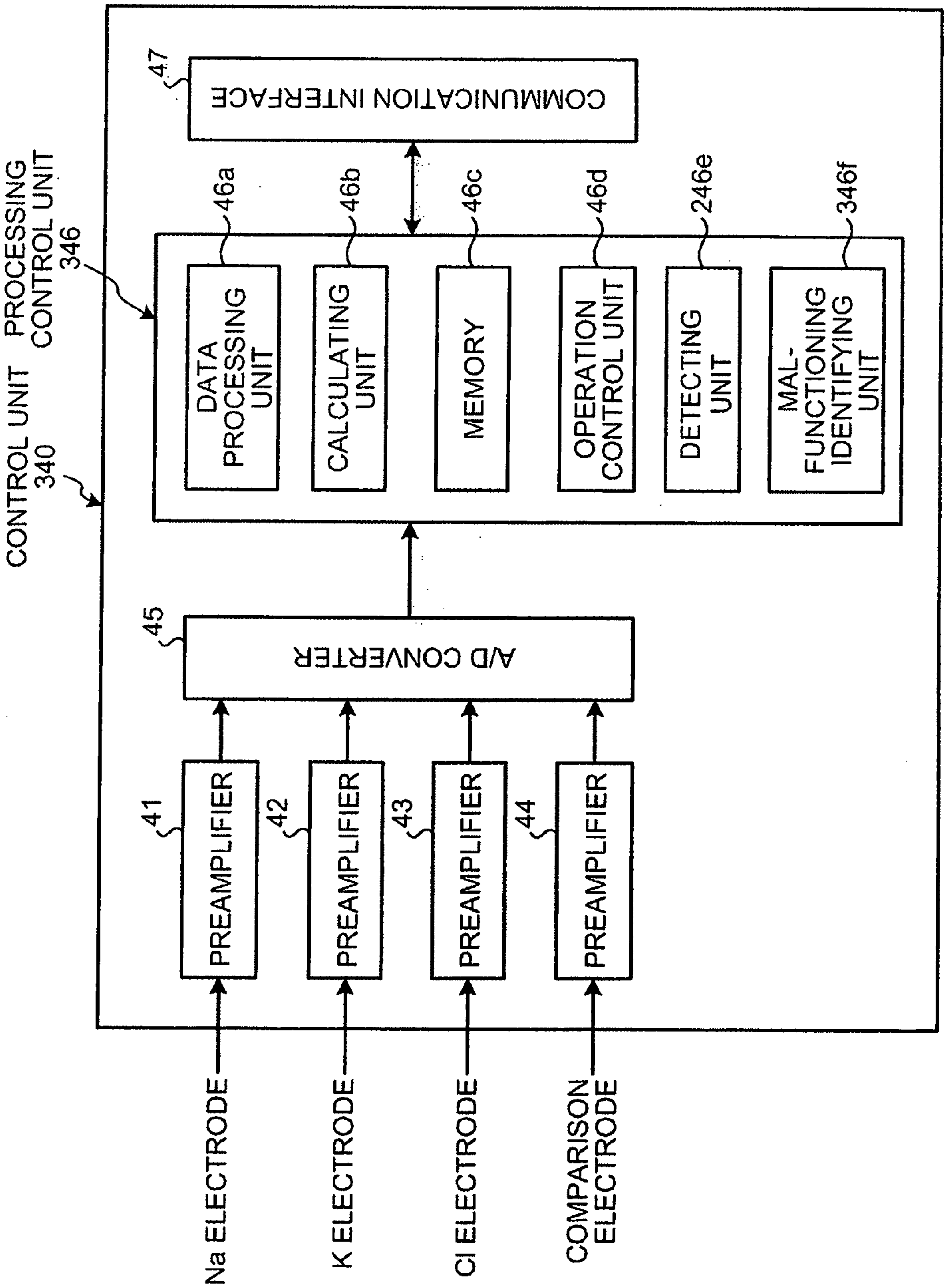
CONTROL UNIT 340
PROCESSING CONTROL UNIT 346
COMMUNICATION INTERFACE
47
46a
46b
46c
46d
246e
346f
DATA PROCESSING UNIT
CALCULATING UNIT
MEMORY
OPERATION CONTROL UNIT
DETECTING UNIT
MAL-FUNCTIONING IDENTIFYING UNIT
45
A/D CONVERTER
41
42
43
44
PREAMPLIFIER
PREAMPLIFIER
PREAMPLIFIER
PREAMPLIFIER
Na ELECTRODE
K ELECTRODE
Cl ELECTRODE
COMPARISON ELECTRODE

FIG.21

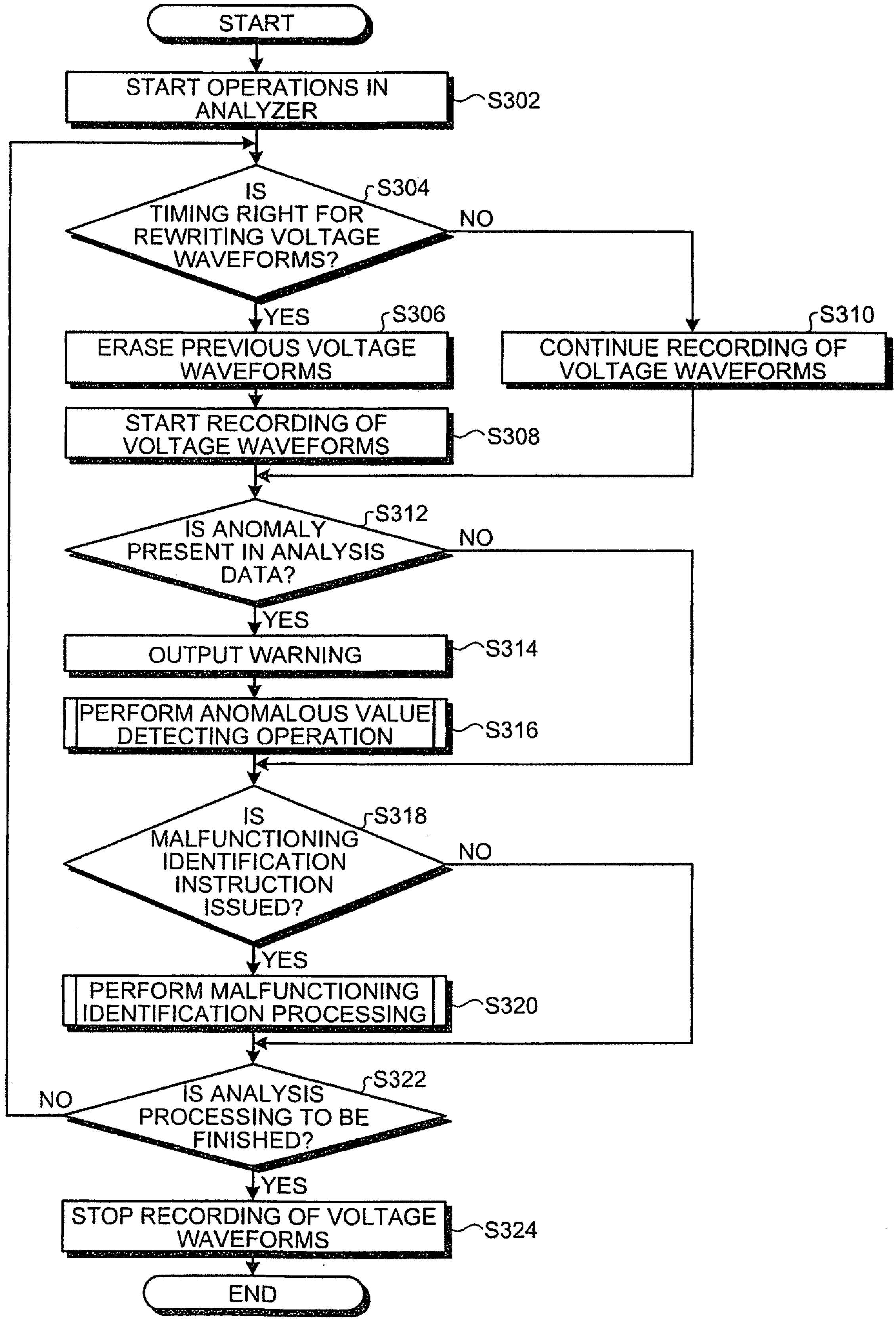
START
START OPERATIONS IN ANALYZER
S302
IS TIMING RIGHT FOR REWRITING VOLTAGE WAVEFORMS?
S304
NO
YES
ERASE PREVIOUS VOLTAGE WAVEFORMS
S306
CONTINUE RECORDING OF VOLTAGE WAVEFORMS
S310
START RECORDING OF VOLTAGE WAVEFORMS
S308
IS ANOMALY PRESENT IN ANALYSIS DATA?
S312
NO
YES
OUTPUT WARNING
S314
PERFORM ANOMALOUS VALUE DETECTING OPERATION
S316
IS MALFUNCTIONING IDENTIFICATION INSTRUCTION ISSUED?
S318
NO
YES
PERFORM MALFUNCTIONING IDENTIFICATION PROCESSING
S320
IS ANALYSIS PROCESSING TO BE FINISHED?
S322
NO
YES
STOP RECORDING OF VOLTAGE WAVEFORMS
S324
END

FIG.22

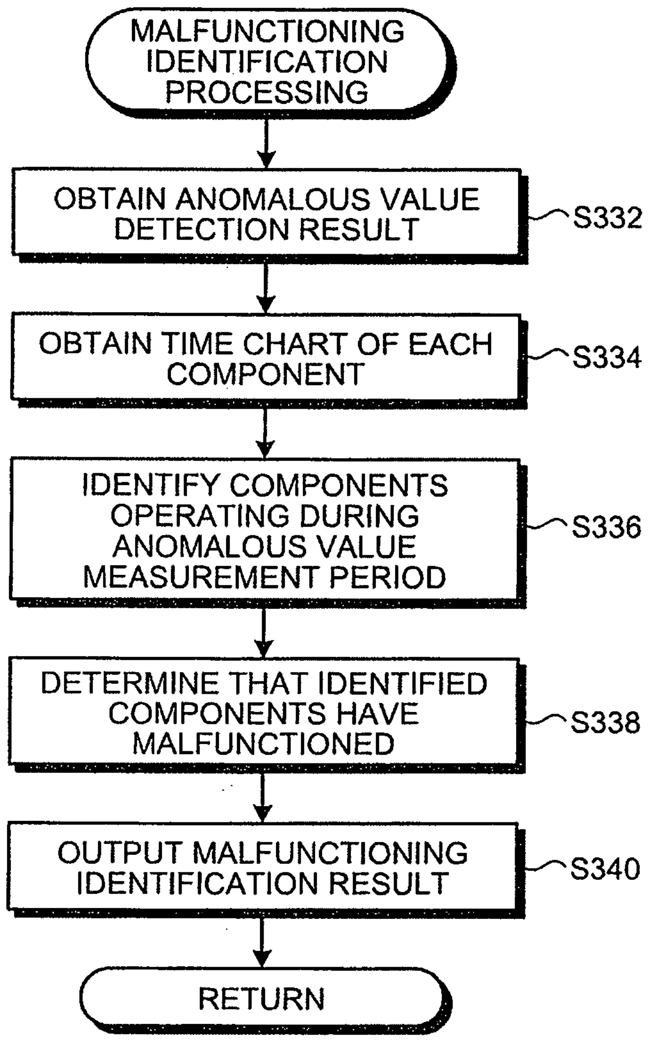
MALFUNCTIONING IDENTIFICATION PROCESSING
OBTAIN ANOMALOUS VALUE DETECTION RESULT
S332
OBTAIN TIME CHART OF EACH COMPONENT
S334
IDENTIFY COMPONENTS OPERATING DURING ANOMALOUS VALUE MEASUREMENT PERIOD
S336
DETERMINE THAT IDENTIFIED COMPONENTS HAVE MALFUNCTIONED
S338
OUTPUT MALFUNCTIONING IDENTIFICATION RESULT
S340
RETURN

FIG.23

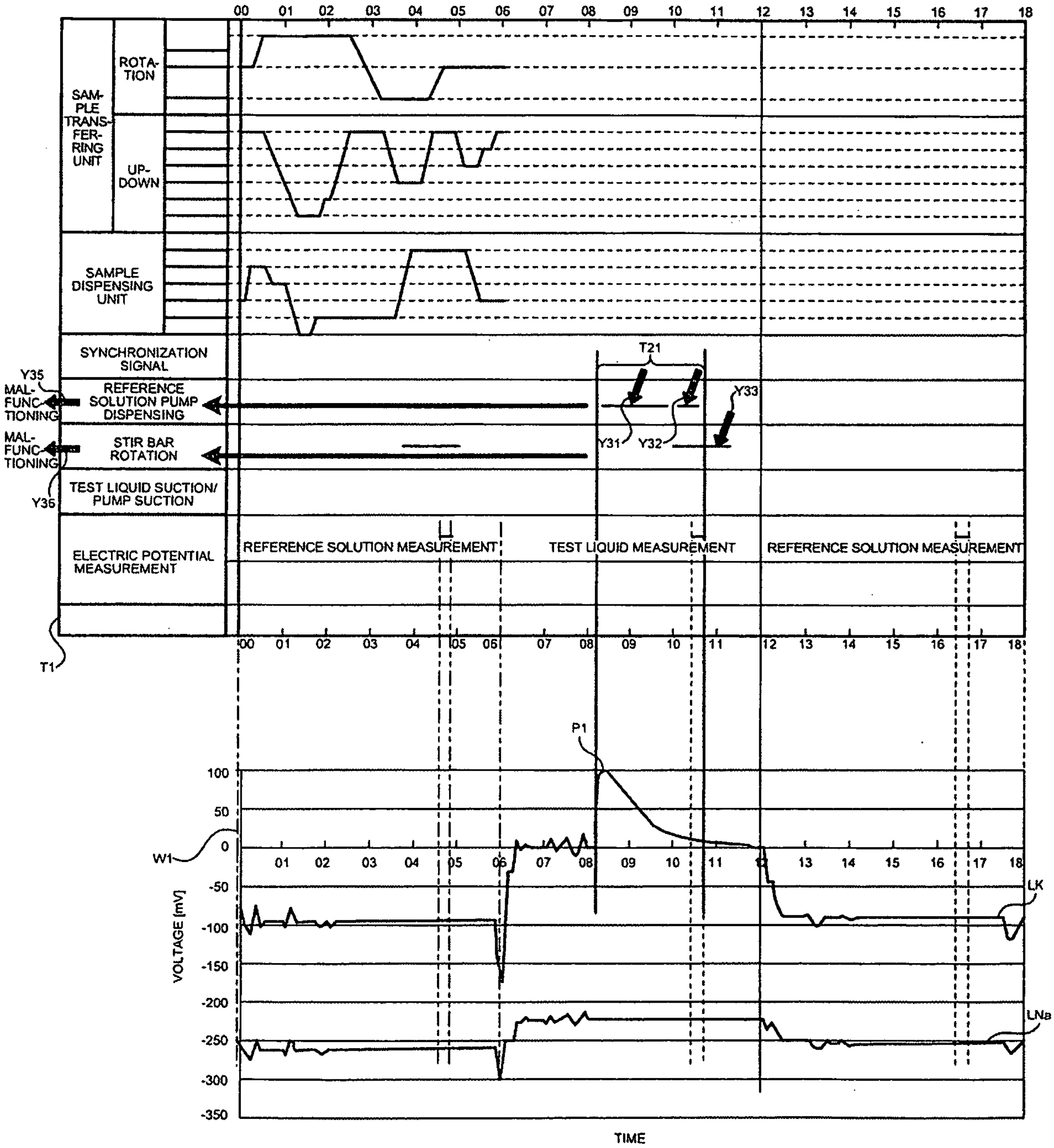

SAMPLE TRANSFERRING UNIT
ROTATION
UP-DOWN
SAMPLE DISPENSING UNIT
SYNCHRONIZATION SIGNAL
REFERENCE SOLUTION PUMP DISPENSING
STIR BAR ROTATION
TEST LIQUID SUCTION/ PUMP SUCTION
ELECTRIC POTENTIAL MEASUREMENT
MALFUNCTIONING
MALFUNCTIONING
Y35
Y36
T1
T21
Y31
Y32
Y33
REFERENCE SOLUTION MEASUREMENT
TEST LIQUID MEASUREMENT
REFERENCE SOLUTION MEASUREMENT
P1
W1
LK
LNa
VOLTAGE [mV]
TIME

FIG.24

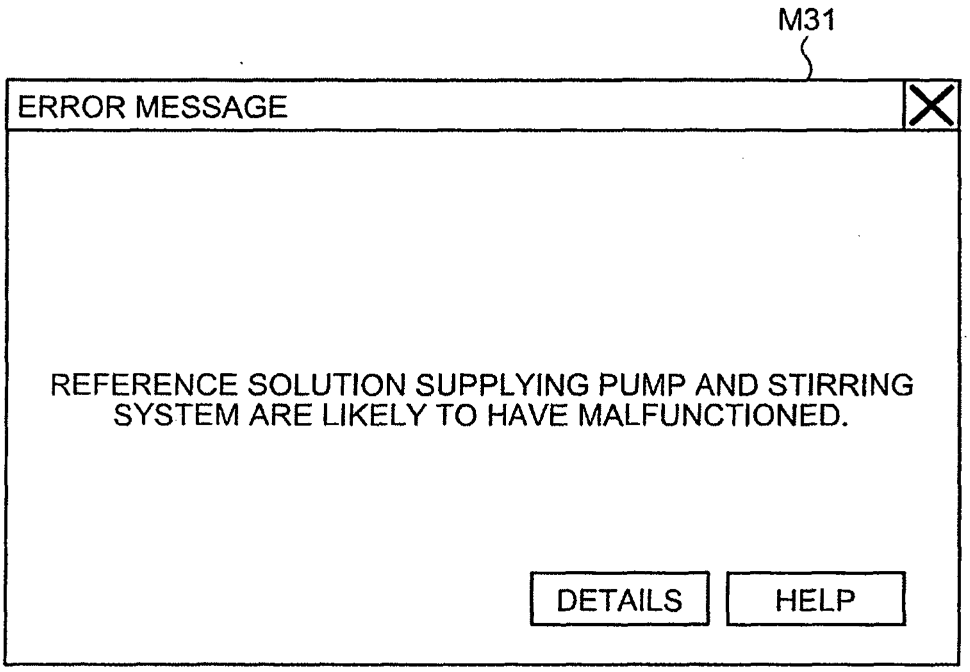
M31
ERROR MESSAGE
REFERENCE SOLUTION SUPPLYING PUMP AND STIRRING SYSTEM ARE LIKELY TO HAVE MALFUNCTIONED.
DETAILS
HELP

**INTERNATIONAL SEARCH REPORT**

International application No.
PCT/JP2008/069239

A. CLASSIFICATION OF SUBJECT MATTER
*G01N27/416*(2006.01)i, *G01N27/26*(2006.01)i

According to International Patent Classification (IPC) or to both national classification and IPC

B. FIELDS SEARCHED

Minimum documentation searched (classification system followed by classification symbols)
G01N27/416, G01N27/26

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | Microfilm of the specification and drawings annexed to the request of Japanese Utility Model Application No. 137329/1989(Laid-open No. 76161/1991)<br>(Hitachi, Ltd.),<br>30 July, 1991 (30.07.91),<br>Full text; Figs. 1 to 4<br>(Family: none) | 1,3-9<br>2,10 |
| Y<br>A | JP 2004-294267 A (Shimadzu Corp.),<br>21 October, 2004 (21.10.04),<br>Par. Nos. [0015] to [0035]; Figs. 1 to 3<br>(Family: none) | 1,3-9<br>2,10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 December, 2008 (01.12.08) | 09 December, 2008 (09.12.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2008/069239

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-004586 A (Hitachi, Ltd.), 12 January, 2001 (12.01.01), Claims; Par. Nos. [0013] to [0030] (Family: none) | 1-10 |
| A | JP 7-333189 A (Olympus Optical Co., Ltd.), 22 December, 1995 (22.12.95), Claims (Family: none) | 1-10 |
| A | JP 2-159548 A (Toshiba Corp.), 19 June, 1990 (19.06.90), Claims (Family: none) | 1-10 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001004586 A